# EUROPEAN PATENT APPLICATION

(11) **EP 4 706 366 A1**
(43) Date of publication of application: **11.03.2026**
(21) Application number: 25191308.3
(22) Date of filing: 23.07.2025
(51) Int. Cl.: A01B 79/00, G06V 10/00, G06V 20/56

(54) **METHODS OF DETECTING ANOMALIES ASSOCIATED WITH AGRICULTURAL IMPLEMENTS, AND RELATED AGRICULTURAL MACHINES**

(30) Priority: 09.09.2024 GB 202413247
(71) Applicant: AGCO International GmbH, 8212 Neuhausen am Rheinfall (CH)
(72) Inventor: MUJKIC, Esma, 8930 Randers (DK); CHRISTIANSEN, Martin Peter, 8930 Randers (DK); SLEZAK, Filip, 8930 Randers (DK); LAURSEN, Morten Stigaard, 8930 Randers (DK)
(74) Representative: AGCO Intellectual Property Department

(57) **Abstract**

An agricultural machine includes an agricultural machine and an agricultural implement coupled to the agricultural machine, one or more spatial sensors coupled to the agricultural vehicle, one or more agricultural implement sensors coupled to the agricultural implement, and an anomaly detection system that receives spatial data from the one or more spatial sensors and agricultural implement sensor data from the agricultural implement sensors. The anomaly detection system operates on a computing device including at least one processor, and instructions that cause the processor to receive the spatial data and the agricultural implement sensor data, utilize advanced machine learning model techniques to detect anomaly predictions associated with the agricultural implement based on the spatial data and the agricultural implement sensor data and control operations of the agricultural implement based on the anomaly predictions of the associated with the agricultural implement. Related agricultural machines and methods are also disclosed.

## Description

### CROSS-REFERENCE TO RELATED APPLICATION

### FIELD

Embodiments of the present disclosure relate generally to agricultural machines including agricultural implements including various sensors that provide data to an anomaly detection system. In particular, embodiments of the present disclosure relate to detection of anomalies associated with agricultural implements and controlling operations of the agricultural machine and/or the agricultural implement based on the detected anomalies, and to related systems and methods.

### BACKGROUND

In the field of agriculture, vehicles such as tractors, harvesters, and other specialized equipment are commonly used to perform various tasks in broad acre fields. It has become increasingly common for these types of agricultural vehicles to feature automated driving and/or safety systems that rely on data from various sensors mounted to the agricultural vehicle to automatically move the agricultural vehicle through a field or other similar environment. These vehicles, however, often operate in complex and dynamic agricultural environments where anomalies may be present. For example, anomalies in an agricultural setting may include stones, non-standard structures, misplaced objects, power poles, trees, buildings, bodies of water, human bystanders, animals, and more.

Some systems include anomaly detection features that rely on data from LiDAR units, GNSS units, and/or radar units. While these anomaly detectors can provide some information about the environment surrounding an agricultural vehicle, they generally have limitations in terms of accuracy, cost, and complexity. Additionally, such anomaly detectors are often poorly suited for detecting many of the types of anomalies commonly present in agricultural settings such as, small objects, thin obstacles, or irregularly shaped features.

In some instances, anomaly detectors have been proposed that incorporate camera-based features to compensate for the shortcomings of other sensor-based systems. Camera-based anomaly detectors can capture rich visual information in a more cost-effective way. Despite this, existing camera-based systems for anomaly detection typically suffer from several issues, such as difficulty in handling varying lighting conditions, occlusions, and clutter in images. Moreover, many of these camera-based systems rely on traditional image processing techniques or simple machine learning models, which typically fail to robustly and accurately detect a wide range of anomalies in complex agricultural settings.

These shortcomings are further compounded by existing anomaly detection systems inability to consider spatial distributions and relationships between anomalies in a complex setting. This is particularly true when the anomaly is moving through the agricultural setting (e.g., as with a person who is walking through a field), when the agricultural vehicle is moving, or when both the anomaly and the vehicle are moving-as is common in agricultural settings.

### BRIEF SUMMARY

In some embodiments, a method of operating an agricultural machine including an agricultural implement towed by an agricultural vehicle in an agricultural field includes receiving spatial data of at least one of the agricultural implement or the agricultural field worked by the agricultural implement from one or more spatial sensors coupled to the agricultural vehicle or one or more LiDAR units coupled to the agricultural vehicle, applying an anomaly detection deep neural network to the spatial data to generate one or more anomaly predictions associated with operation of the agricultural implement, and controlling one or more operations of the agricultural implement based on the one or more anomaly predictions.

Receiving spatial data of the agricultural implement from one or more spatial sensors may include receiving spatial data from one or more cameras coupled to the agricultural vehicle or one or more LiDAR units coupled to the agricultural vehicle.

The method may further include receiving implement sensor data from one or more implement sensors coupled to the agricultural implement to determine an operating condition of the agricultural implement. In some embodiments, the method includes applying the anomaly detection deep neural network to the spatial data responsive to determining the agricultural implement is in an operating condition.

The method may include applying another anomaly detection deep neural network to the implement sensor data to generate one or more implement anomaly predictions.

Receiving implement sensor data may include receiving implement sensor data from one or more of an inertial measurement unit, a strain gauge, a microphone array, a stain gauge, or a hydraulic sensor.

In some embodiments, generating one or more anomaly predictions associated with operation of the agricultural implement includes generating one or more anomaly predictions of locations of the agricultural field previously worked by the agricultural implement.

Receiving spatial data may include receiving spatial data of an agricultural implement comprising a plough, a harrow, a planter, a sprayer, a fertilizer, an irrigator, a mower, a tedder, a cultivator, a rake, a baler, a mulcher, or a harvester.

In some embodiments, applying an anomaly detection deep neural network to the spatial data includes applying an anomaly detection deep neural network trained on a dataset comprising spatial data of the agricultural implement during normal operation of the agricultural implement.

The method may further include training the anomaly detection deep neural network to generate the anomaly predictions associated with operation of the agricultural implement by applying the anomaly detection deep neural network to training inputs associated with normal operating conditions of the agricultural implement.

In some embodiments, the method further includes generating a graphical user interface indicating the one or more anomaly predictions for display on a computing device coupled to the agricultural vehicle.

Controlling the one or more operations of the agricultural implement based on the one or more anomaly predictions may include one or more of causing the agricultural implement to stop working the agricultural field, causing the agricultural vehicle to stop moving in the agricultural field, causing the agricultural implement to slow down in the agricultural field, causing the agricultural implement to deviate from a pre-planned route in the agricultural field, causing the agricultural vehicle to use an onboard signal tower to highlight areas of the agricultural implement or the agricultural field corresponding to the one or more anomaly predictions, causing the agricultural vehicle to flash onboard visual lights, or causing the agricultural vehicle to sound a horn or other auditory system.

The method may include stopping operation of the agricultural implement responsive to generating the one or more anomaly predictions.

In some embodiments, the method includes generating a map of the agricultural field indicative of locations of the agricultural field having the one or more anomaly predictions.

In some embodiments, an agricultural machine positioned in an agricultural field includes an agricultural vehicle, an agricultural implement coupled to the agricultural vehicle, one or more spatial sensors coupled to the agricultural vehicle and configured to generate spatial data of the agricultural implement, one or more implement sensors coupled to the agricultural implement and configured to generate implement sensor data of the agricultural implement, and an anomaly detection system operably coupled to the one or more spatial sensors. The anomaly detection system includes at least one processor, and at least one non-transitory computer-readable storage medium having instructions thereon that, when executed by the at least one processor, cause the anomaly detection system to receive the spatial data of the agricultural implement from the one or more spatial sensors, apply an anomaly detection deep neural network to the spatial data to generate one or more anomaly predictions associated with the agricultural implement, and control one or more operations of the agricultural implement based on the one or more anomaly predictions.

The at least one non-transitory computer-readable storage medium may further store instructions thereon that, when executed by the at least one processor, cause the anomaly detection system to receive the implement sensor data from the one or more implement sensors.

In some embodiments, the at least one non-transitory computer-readable storage medium further stores instructions thereon that, when executed by the at least one processor, cause the anomaly detection system to apply the anomaly detection deep neural network to the spatial data responsive to predicting one or more anomalies based on the implement sensor data.

The one or more implement sensors may include one or more of an inertial measurement unit, a strain sensor, a microphone array, or a hydraulic sensor.

The anomaly detection deep neural network may include an auto-encoder.

In some embodiments, an agricultural vehicle includes an agricultural vehicle comprising a propulsion system, wheels operably coupled to a chassis of the agricultural vehicle, an agricultural implement coupled to the agricultural vehicle, one or more spatial sensors coupled to the agricultural vehicle and configured to generate spatial data of the agricultural implement, one or more implement sensors coupled to the agricultural implement and configured to generate implement sensor data of the agricultural implement, and an anomaly detection system operably coupled to the one or more spatial sensors and the one or more implement sensors. The anomaly detection system includes at least one processor, and at least one non-transitory computer-readable storage medium having instructions thereon that, when executed by the at least one processor, cause the anomaly detection system to receive the implement sensor data from the one or more implement sensors, apply a first anomaly detection deep neural network to the implement sensor data to generate one or more anomaly predictions based on the implement sensor data, responsive to generating the one or more anomaly predictions based on the implement sensor data, receive the spatial data of the agricultural implement from the one or more spatial sensors, apply an anomaly detection deep neural network to the spatial data to generate one or more anomaly predictions associated with the agricultural implement, and control one or more operations of the agricultural implement based on the one or more anomaly predictions associated with the agricultural implement.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified overview of an agricultural field including where an agricultural machine including an agricultural vehicle and an agricultural implement may move through a predefined route, in accordance with one or more embodiments of the disclosure.
FIG. 2 is a simplified perspective view of the agricultural machine including an anomaly detection system, in accordance with one or more embodiments of the disclosure.
FIG. 3 is a simplified overview of an encoder-decoder machine learning model, in accordance with one or more embodiments of the disclosure.
FIG. 4 is an overview diagram of the process of utilizing an encoder-decoder machine learning model to generate anomaly predictions associated with an agricultural field, in accordance with one or more embodiments of the disclosure.
FIG. 5 and FIG. 6 illustrate additional detail associated with the process of generating anomaly predictions associated with an agricultural field, in accordance with one or more embodiments of the disclosure.
FIG. 7 is an embodiment of the anomaly detection system operating in connection with the agricultural machine, in accordance with one or more embodiments of the disclosure.
FIG. 8 is a simplified flow chart illustrating a method of detecting anomalies associated with the agricultural implement during operation thereof, and controlling one or more operations of the agricultural implement based on the detected anomalies, in accordance with one or more embodiments of the disclosure.
FIG. 9 is a schematic of a computer-readable storage medium including processor-executable instructions configured to embody one or more of the methods of operating an agricultural vehicle, according to one or more embodiments of the disclosure.

### DETAILED DESCRIPTION

The illustrations presented herein are not actual views of any agricultural vehicles or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure, assembly, spreader, or agricultural implement. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structures and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description it should be understood that the terms "longitudinal" and "transverse" are made in relation to a machine's (e.g., agricultural implement's, agricultural application machine's) normal direction of travel. In other words, the term "longitudinal" equates to the fore-and-aft direction, whereas the term "transverse" equates to the crosswise direction, or left and right. As used herein, the terms "lateral" and "transverse" are used interchangeably. Furthermore, the terms "axial" and "radial" are made in relation to a rotating body such as a shaft, wherein axial relates to a direction along the rotation axis and radial equates to a direction perpendicular to the rotation axis.

As used herein, "spatial data" means and includes data obtained from one or more of a camera, a LiDAR unit, and/or a radar unit.

As mentioned above, conventional anomaly detection techniques fail to robustly and accurately detect anomalies that are unique to agricultural settings. In particular, anomaly detection systems and techniques are generally not able to monitor the operation of agricultural implements of agricultural machines, such as agricultural implements that are coupled to and/or towed an agricultural vehicle, such as a tractor. Rather, operation of agricultural implements is generally monitored visually by an operator of the agricultural implement. However, the operator may also be navigating the agricultural machine and controlling one or more other parameters of the agricultural machine and problems with the operation of the agricultural implement may go unnoticed, reducing the efficacy of agricultural operations performed by the agricultural implement, causing safety issues, and/or damaging the agricultural vehicle and/or the agricultural implement.

According to embodiments described herein, an agricultural machine includes an agricultural machine including an agricultural vehicle and an agricultural implement. The agricultural machine (such as the agricultural vehicle) includes an anomaly detection system configured to predict one or more anomalies associated with the agricultural implement, such as operation of the agricultural implement and/or in an agricultural field worked by the agricultural implement. The agricultural machine may include a plurality of sensors coupled to the agricultural vehicle and a plurality of sensors coupled to the agricultural implement for detecting one or more operating conditions of the agricultural vehicle and/or the agricultural implement. For example, one or more spatial sensors (e.g., one or more cameras, one or more LiDAR units, and/or one or more radar units) may be coupled to the agricultural vehicle and configured to gather spatial data (e.g., image data, LiDAR data, radar data) of the agricultural implement and/or of the agricultural field worked by the agricultural machine as the agricultural machine traverses the agricultural field. In addition, one or more additional sensors, such as one or more hydraulic sensors, inertial measurement unit (IMU) sensors, speed sensors, or other sensors may be coupled to the agricultural vehicle and configured to gather additional sensor data. Further, one or more agricultural implement sensors may be coupled to the agricultural implement and configured to measure one or more operating conditions of the agricultural implement. The one or more agricultural implement sensors may include one or more hydraulic sensors, IMU sensors, strain gauges, microphone arrays, or additional sensors.

The anomaly detection system includes one or more anomaly detection deep neural networks configured to generate anomaly predictions based on the spatial data. The anomaly detection deep neural network may be trained on a dataset associated with normal operations of the agricultural implement including, for example, the pose, orientation, and movements of the agricultural implement. After receiving the spatial data, the anomaly detection system may apply the anomaly detection deep neural network(s) to the spatial data to generate anomaly predictions associated with the operation of the agricultural implement. The detected anomalies may be an indication that the agricultural implement is not operating as intended, that the agricultural implement is malfunctioning, and/or that operation of the agricultural implement is abnormal.

In some embodiments, the one or more additional sensors coupled to the agricultural vehicle and/or the agricultural implement sensors coupled to the agricultural implement may be configured to trigger operation of the anomaly detection deep neural network of the anomaly detection system. For example, the anomaly detection system may be configured to detect the presence of anomalies associated with the operation of the agricultural implement responsive to an indication that the agricultural implement is operational and/or responsive to an indication of an anomaly in the agricultural implement sensor data received by one or more of the agricultural implement sensors. The one or more additional sensors coupled to the agricultural vehicle and/or the one or more agricultural implement sensors may be configured to provide an indication that the agricultural implement is operational. For example, responsive to determining a strain on the agricultural implement, an operation of a hydraulic system operably coupled to the agricultural implement, sound data associated with the agricultural implement, or other data associated with the agricultural implement, the anomaly detection system may be configured to operate the anomaly detection deep neural network to predict one or more anomalies associated with operation of the agricultural implement. In some embodiments, an anomaly detection deep neural network may be configured to analyze the agricultural implement sensor data to detect anomalies in the agricultural implement sensor data and predict one or more implement anomalies based on the agricultural implement sensor data. Responsive to predicting the one or more implement anomalies based on the agricultural implement sensor data, the anomaly detection system may apply the anomaly detection deep neural network to the spatial data to generate one or more anomaly predictions associated with the agricultural implement.

Detection of anomalies associated with the agricultural implement allows the operator of the agricultural machine including the agricultural implement to perform tasks associated with the operation of the agricultural implement rather than visually monitoring whether the agricultural implement is functioning as intended. Rather, detection of whether the agricultal implement is operating as intended may be performed autonomously and the operator of the agricultural machine may focus on navigating the agricultural machine and other aspects of the agricultural operation performed by the agricultural machine. By way of comparison, operators of agricultural implements not including an anomaly detection system configured to detect anomalies associated with operation of the agricultural implement may have to visually monitor operation of the agricultural implement while driving and navigating the agricultural machine including the agricultural implement, and while performing one or more agricultural operations. The anomaly detection system described herein facilitates more efficient operation of the agricultural machine and improves working of the agricultural field by reducing the time that the agricultural field is worked while the agricultural implement is not operating as intended (which may otherwise go unnoticed by the operator of the agricultural vehicle without the use of the anomaly detection system).

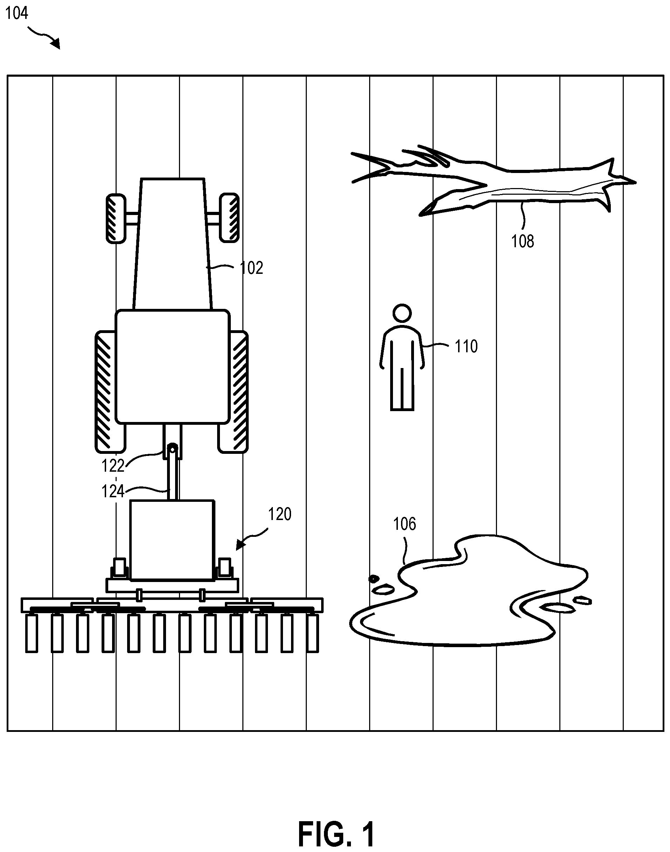

To illustrate, FIG. 1 depicts an agricultural machine 100 including an agricultural vehicle 102 coupled to an agricultural implement 120 moving in an agricultural field 104. Generally, the agricultural vehicle 102 and the agricultural implement 120 may move along a predetermined route to interact with the entire agricultural field 104 (e.g., to harvest a crop, to turn over the soil, to spread fertilizer, etc.). In some embodiments, the agricultural machine 100 may be un-manned-either operating autonomously or being driven remotely. In additional embodiments, the agricultural machine 100 may be manned by a human operator. Despite this, even when a human operator is driving the agricultural machine 100, anomalies associated with operation of the agricultural implement 120 may be difficult for the operator to see due to poor lighting conditions, location of the anomalies associated with the agricultural implement 120, and so forth. The agricultural implement 120 may simply be referred to herein as an "implement 120."

The implement 120 may be configured to operably couple to the agricultural vehicle 102 to be towed by the agricultural vehicle 102 and/or may otherwise be a part of the agricultural machine 100. In some embodiments, the agricultural vehicle 102 includes a hitch 122 configured to couple to a drawbar 124 of the implement 120 for operably coupling the implement 120 to the agricultural vehicle 102, such as when the implement 120 includes a towed implement. Connection of the implement 120 to the hitch 122 may facilitate towing of the implement 120 by the agricultural vehicle 102. While FIG. 1 illustrates the implement 120 as being towed behind the agricultural vehicle 102, in some embodiments, the implement 120 is self-propelled (such as forage harvesters, combine harvesters, and self-propelled sprayers).

As described in additional detail herein, the implement 120 may be configured to perform one or more agricultural operations for working the agricultural field 104. The anomaly detection system described herein may facilitate monitoring the implement 120 and the agricultural machine 100 for detecting and/or predicted anomalies associated with operation of the implement 120 and/or the agricultural machine 100. For example, the anomaly detection system may be configured to autonomously and automatically detect anomalies (abnormalities) in the operating conditions of the implement 120, such as deviations from normal operation of the implement 120.

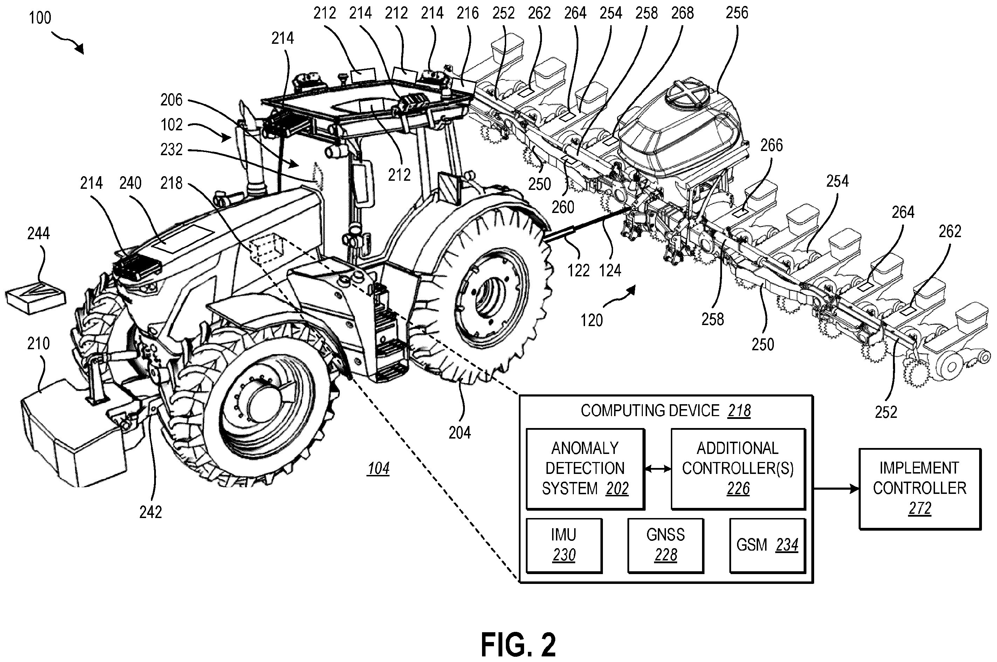

For clarity and ease of understanding the description, not all components of the implement 120 are illustrated in FIG. 1. FIG. 2 and the associated description illustrate and describe additional components of the agricultural implement 120.

As further shown in FIG. 1, the agricultural field 104 may include various anomalies present in the agricultural field. For example, the agricultural field 104 may include pooled water 106, a fallen tree 108, or even a person 110 walking through the agricultural field 104. In one or more embodiments, an anomaly within the agricultural field 104 can include any object, person, or animal within the agricultural field 104 whose presence in the agricultural field 104 deviates from what is standard, normal, or expected in that setting. To illustrate, the pooled water 106 may be present as the result of a broken pipe or heavy rainstorm. Similarly, the fallen tree 108 may have been standing near the agricultural field 104 until it was blown down in a storm. Some anomalies in the agricultural setting may be static, such as with the pooled water 106 and the fallen tree 108. Other anomalies in the same setting may be dynamic (e.g., moving) as with the person 110, animals, other vehicles, objects blowing in the wind, and so forth. Moreover, the agricultural vehicle 102 may also be static or dynamic within the agricultural field 104.

Any of the anomalies potentially present within the agricultural field 104 can present hazards and safety issues for one or both of the agricultural vehicle 102 or the implement 120. For example, the pooled water 106 can cause the agricultural vehicle 102 and/or the implement 120 to get stuck in the mud or can cause engine problems if the water is too deep. The fallen tree 108 can cause the agricultural vehicle 102 and/or the implement 120 or a boom extending therefrom to become ensnared or blocked. Moreover, the person 110 could be seriously harmed if the agricultural vehicle 102 travels too close to them. All of these scenarios are further complicated when the anomaly and/or the agricultural vehicle 102 is dynamic (e.g., moving), when the current weather is making visibility difficult, when it is nighttime, and so forth.

During operation, the implement 120 may interact with the agricultural field 104 and/or may include components that interact with one another to facilitate desired operation thereof. The implement 120 may include one or more sensors coupled thereto for measuring (determining) one or more operating parameters of the implement 120. In one or more embodiments, the anomaly detection system disclosed herein utilizes various approaches to robustly and accurately detect anomalies associated with the agricultural implement 120, whether at the implement 120 itself, or in the agricultural field 104 worked by the implement. The anomaly detection system may be configured to control operations of the agricultural machine 100 (e.g., one or both of the agricultural vehicle 102 or the implement 120) based on those detected anomalies.

FIG. 2 is a simplified perspective view of the agricultural machine 100 including the agricultural vehicle 102 and the agricultural implement 120, in accordance with one or more embodiments of the disclosure. The agricultural machine 100 includes an anomaly detection system 202 as part of a computing device 218. In some embodiments, the agricultural vehicle 102 includes a tractor. The agricultural vehicle 102 may be configured to drive over the agricultural field 104, as described above.

In some embodiments, the implement 120 includes a frame 250 coupled to a toolbar 252. In some embodiments, wheels support all or a portion of the weight of the implement 120. In some embodiments, the agricultural vehicle 102 may support all or a portion of the weight of the implement 120 via the tow hitch 122 (FIG. 1), and the wheels may be omitted. In some embodiments, the toolbar 252 carries one or more tools 254, which may include one or more field-engaging elements, ground-engaging elements, or other agricultural tools. If the implement 120 is carrying a product (e.g., seed, fertilizer, pesticide, herbicide, fungicide) to be delivered to the agricultural field 104, the implement 120 may include a product tank 256. In some embodiments, the implement 120 includes one or more hydraulic components for controlling one or more operations of the implement 120. For example, the implement 120 may include hydraulic actuators for applying a force (pressure) to the agricultural field 104 with the tools 254. In some embodiments, the implement 120 includes actuators 258 configured to facilitate folding of the toolbar 252, such as during road transportation of the implement 120.

As described above, the implement 120 may include tools 254 configured for working the agricultural field 104. Operation of the implement 120 may involve moving parts that interact with one another and interact with the agricultural field 104 and/or crops in the agricultural field 104. For example, where the implement 120 includes a plough, the implement 120 is configured to turn and break up soil in the agricultural field 104 to prepare the agricultural field 104 for planting operations; where the implement 120 includes a harrow, the implement 120 is configured to break up clods and agglomerations of soil (e.g., after ploughing) to further prepare the agricultural field 104 for planting operations; where the implement 120 includes a planter or seeder, the implement 120 is configured to introduce seeds into the soil of the agricultural field 104 at an appropriate depth and spacing; where the implement 120 includes a sprayer, the implement 120 is configured to apply one or more pesticides, herbicides, or fertilizers in liquid form to the agricultural field 104 and/or crops; where the implement 120 includes a fertilizer, the implement 120 is configured to apply solid fertilizer to the agricultural field 104 and/or crops; where the implement 120 includes an irrigator (e.g., a surface irrigator, a sprinkler, a drip irrigation system), the implement 120 is configured to provide water to the agricultural field 104 and/or the crops; where the implement 120 includes a mover, the implement 120 is configured to cut grass and other plants in the agricultural field 104, such as for hay production; where the implement 120 includes a tedder, the implement 120 is configured to spread hay and/or silage to facilitate drying thereof; where the implement 120 includes a cultivator, the implement 120 is configured to loosen soil and destroy weeds in crop rows, which may be performed before or after planting operations; where the implement 120 includes a rake, the implement 120 is configured to gather hay or stray into windrows; where the implement 120 includes a baler, the implement 120 is configured to make the windrows into bales; where the implement 120 includes a mulcher, the implement 120 is configured to spread material over the surface of the soil in the agricultural field 104, which may facilitate retaining moisture, controlling weed growth, and improvement of the soil health; and where the implement 120 includes a harvester, the implement 120 is configured to gather mature crops from the agricultural field 104. Of course, the implement 120 may include types of implements for working an agricultural field other than those described.

While the implement 120 has been described and illustrated as having a particular configuration, the disclosure is not so limited. The implement 120 may include any configuration of an agricultural implement for working the agricultural field 104. By way of non-limiting example, the implement 120 may include one or more of a plough (including a mouldboard, a ploughshare, a coulter, a furrow wheel, and/or a skimmer), a harrow (including tines), a planter including row units, a seeder (e.g., an air seeder, a seeder including row units), a sprayer, a fertilizer, an irrigator, a mower, a tedder (including tines), a cultivator, a rake, a baler, a mulcher, a harvester (e.g., a combine harvester, a forage harvester), a spreader, a tiller, a swather, or another other type of agricultural implement used for working an agricultural field and configured to be towed by an agricultural vehicle 102 and/or including tools configured for working the agricultural field, even if not towed. As one example, where the implement 120 includes a sprayer, the implement 120 may not including the toolbar 252; rather, the implement 120 may include a boom carrying a plurality of nozzles, the boom configured to laterally extend from a body of the implement 120 or from the agricultural vehicle 102.

The implement 120 may include one or more implement sensors for measuring (detecting) one or more operating parameters of the implement 120. For example, the implement 120 may include one or more hydraulic sensors 260, one or more inertial measurement units (IMUs) 262, one or more strain sensors 264 (stain gauges), one or more microphones or microphone arrays 266, and one or more additional sensors 268 (such as one or more speed (ground speed) sensors, sensors to determine whether the implement 120 is receiving power from the agricultural vehicle 102 (e.g., a power take-off sensor), or other sensors). The one or more hydraulic sensors 260 may be configured to measure one or more conditions associated with operation of the implement 120, such as the hydraulic pressure in hydraulic lines and/or in hydraulic cylinders (e.g., in the actuators 258) during operation of the implement 120.

In some embodiments, one or more IMUs 262 are coupled to the implement 120. For example, one or more IMUs 262 may be coupled to the implement 120, such as to different tools 254. Of course, the IMUs 262 may be coupled to the implement 120 at other portions of the implement 120, such as to the drawbar 124, the frame 250, and/or the toolbar 252. The IMUs 262 may be configured to measure one or more of a specific force, an angular rate, and an orientation of the implement 120 and may include at least one of each of an accelerometer, a gyroscope, and a magnetometer. The IMUs 262 may be configured to facilitate determining one or more of a linear acceleration of the implement 120, a direction of travel of the implement 120, rotational rates and angular velocity, and a strength and direction of a magnetic field. In some embodiments, each of three mutually orthogonal axes (e.g., the pitch, roll, and yaw) of the implement 120 include an accelerometer, a gyroscope, and a magnetometer. The IMUs 262 may be configured to generate data regarding movement and orientation of the agricultural machine 100, such as the implement 120 and/or the agricultural vehicle 102.

The strain sensors 264 may include force sensors configured to measure the stresses and forces exerted on or by the implement 120 during operation thereof. The strain sensors 264 may be coupled to, for example, the tools 254. In some embodiments, each tool 254 may be coupled to a strain sensor 264. Only some of the strain sensors 264 are shown in FIG. 2 for clarity and ease of understanding the description. In use and operation, the strain sensors 264 may be configured to determine if the implement 120 experiences undue forces or stresses that fall outside of those encountered during normal operations and may be used to trigger the anomaly detection system described herein. Although FIG. 2 illustrates the strain sensors 264 coupled to the tools 254, the disclosure is not so limited. For example, the strain sensors 264 may be coupled to the implement 120 at the drawbar 124, the frame 250, and/or the toolbar 252.

The microphone array 266 may include one or more microphones configured to measure (receive) sound data. For example, each microphone array 266 may be configured to monitor sound emitted by the implement 120 during operation of the implement 120. Variations in the sound pattern measured by the microphone array(s) 266 may be an indication of the operation of the implement 120. For example, sound patterns falling outside of normal operating conditions may be an indication that the implement 120 is not operating as desired or intended. In some embodiments, a microphone array 266 is coupled to one or more of the tools 254. Although FIG. 2 illustrates the microphone array 266 coupled to one of the tools 254, the disclosure is not so limited. For example, one or more microphone arrays 266 may be coupled to the implement 120 at the drawbar 124, the frame 250, and/or the toolbar 252.

The implement 120 may further include one more additional sensors 268 for measuring one or more operating conditions of the implement 120. The additional sensors 268 may include one or more of a position sensor (e.g., configured to measure a position of a portion of the implement 120 relative to another portion of the implement 120), a ground sensor (configured to determine a position of the implement 120 relative to the ground), a temperature sensor, a humidity sensor, or one or more other types of sensors.

In addition, the implement 120 may include an implement controller 272 configured to control one or more operations of the implement 120. The implement controller 272 may be in operable communication with the computing device 218, such as by wired or wireless communication. The implement controller 272 may be configured to control one or more operations of the implement 120, such as the position of the toolbar 252, the operation of the tools 254, the operation of the actuators 258, and/or other parameters of the implement 120. In some embodiments, the implement controller 272 receives one or more operating instructions from the computing device 218.

With continued reference to FIG. 2, the agricultural vehicle 102 includes an operator cabin 206 from which an operator of the agricultural vehicle 102 may control the agricultural vehicle 102, and an engine compartment 208 housing an engine or other propulsion system for providing a motive force for moving the agricultural vehicle 102. In some embodiments, the propulsion system includes motors operably coupled to the wheels 204 of the agricultural vehicle 102. The agricultural vehicle 102 includes a steering system (e.g., a steering wheel and associated steering column, universal joint, and rack-and-pinion) configured for facilitating steering and navigation of the agricultural vehicle 102. The agricultural vehicle 102 may include one or more additional structures or assemblies, such as a header 210, configured for performing one or more agricultural operations (e.g., towing an agricultural implement (e.g., a spreader, row units of a planter), a trailer, etc.

As mentioned above, the agricultural vehicle 102 may include various sensors operably coupled to the agricultural vehicle 102. For example, the agricultural vehicle 102 may include one or more cameras 214 operably coupled to the agricultural vehicle 102. The one or more cameras 214 may be configured to capture image data. The image data may be grayscale image data, color image data (e.g., in the RGB color space), or multispectral image data. The one or more cameras 214 may include one or more of a 2D-camera, a stereo camera, a time-of-flight (ToF) camera configured to capture 2D and/or 3D image data. In some embodiments, a ToF camera may facilitate determining depth information and can improve the accuracy of image data and object pose determination based on the image data received by the one or more cameras 214.

In some embodiments, the one or more cameras 214 are configured to capture 3D image data and may include, for example, a stereo camera. In other embodiments, the one or more cameras 214 are configured to capture 2D image data. The one or more cameras 214 may include one or more of a red, green, blue (RGB) camera, a RGB-IR camera (configured to provide visible images and thermal (e.g., IR) images), a charge-coupled device (CCD) camera, a complementary metal oxide semiconductor (CMOS) image sensor, a stereoscopic camera, a monoscopic camera, a short-wave infrared (SWIR) camera (e.g., configured to capture electromagnetic radiation (e.g., light) having a wavelength within a range of from about 0.4 µm to about 2.5 µm, such as from about 0.9 µm to about 1.7 µm or from about 0.4 µm to about 1.9 µm), or a digital single-reflex camera. In some embodiments, the one or more cameras 214 are configured to capture image data through smoke, fog, snow, and rain and may include a SWIR camera. In some embodiments, the one or more cameras 214 include an RGB-SWIR line scan camera (a 4-sensor RGB SWIR line scan camera). In other embodiments, the one or more cameras 214 are configured to capture RGB image data, SWIR data, long-wave IR (LWIR) data, and/or near-infrared (NIR) data.

In some embodiments, each camera 214 includes a set of cameras and/or a set of lenses spaced from one another. For example, each camera 214 may include a tri-camera set including three cameras. In some embodiments, and as described herein, the image data from each camera of the tri-camera set may be combined to improve the quality of image data captured by the camera 214. For example, a first camera may include an ultra-wide camera, a second camera may include a wide-angle camera, and a third camera may include a telephoto camera. In some such embodiments, each camera 214 includes three individual cameras directly neighboring one another.

The one or more cameras 214 may be configured to capture image data at a frame rate within a range of from about 10 Hz to about 30 Hz. In some embodiments, the frame rate of each of the one or more cameras 214 is substantially the same. However, the disclosure is not so limited, and the frame rate of the one or more cameras 214 may be different than that described. A FOV of each of the one or more cameras 214 may be within a range of from about 60° to about 360°, such as from about 60° to about 90°, from about 90° to about 120°, from about 120° to about 180°, or from about 180° to about 360°. However, the disclosure is not so limited, and the FOV of each of the one or more cameras 214 may be different than those described. In some embodiments, the FOV of each of the one or more cameras 214 is substantially the same as the FOV of the one or more cameras 214.

In some embodiments, the cameras 214 each include a micro-polarizer (a micro-polarizer array) and the image data further includes polarization data. The micro-polarizer array may be configured to polarize the image data in, for example, four separate quadrants; a first quadrant may be polarized in a first direction, a second quadrant may be polarized in a second direction substantially perpendicular to the first direction; a third quadrant may be polarized in a third direction (e.g., about 45° from the first direction and the second direction), and a fourth quadrant may be polarized in a fourth direction substantially perpendicular to the third direction.

In some embodiments, the cameras 214 each include a color filter array, such as a Bayer color filter array (also referred to as a "Bayer filter or a "Bayer filter mosaic"). The color filter array may include, for example, a filter pattern that is half green, one quarter red, and one quarter blue (and also called BGGR, RGBG, GRBG, or RGGB). In some embodiments, the color filter includes repeating units of a RGGB grid, wherein 2x2 group of pixels includes two green pixels, one red pixel, and one blue pixel.

In some embodiments, each of the cameras 214 includes a color filter array stacked with a micro-polarizer array and is configured to generate image data including polarization data at different angles and RGB image data separated into an array. The micro-polarizer and the color filter array may facilitate detection of textures, stress, and material properties of objects in the image data, which may facilitate detection of anomalies from normal patterns. In addition, the color filter array stacked with a micro-polarizer array may reduce false positives that would be valued by glare and/or reflections. Accordingly, in some embodiments, each set of image data captured by each camera 214 includes polarization data in addition to additional image data (e.g., RGB data).

In some embodiments, the cameras 214 are configured and oriented to capture image data of the implement 120, operating of the implement 120, and/or of portions of the agricultural field 104 worked by the implement 120. Accordingly, at least some of the cameras 214 are oriented to capture image data of the implement 120, operation of the implement 120, and/or portions of the agricultural field 104 worked by the implement 120. Each camera 214 may be configured to generate image data.

Additionally, the agricultural vehicle 102 may include one or more light detection and ranging (LiDAR) units 212. In one or more embodiments, the one or more LiDAR units 212 measure distances by illuminating a target with laser light and analyzing the reflected light. For example, each of the one or more LiDAR units 212 can emit a laser pulse toward an object or surface. This laser pulse hits the object or surface and reflects back to the LiDAR unit, which detects the reflected light. The one or more LiDAR units 212 (or a system operating the one or more LiDAR units 212) calculates the distance to the object or surface by measuring the time it took for the laser pulse to return (e.g., "time of flight" or TOF). In one or more embodiments, the one or more LiDAR units 212 have both an orientation and a field of view. In some embodiments, each of the one or more LiDAR units 212 share an orientation and a field of view with a corresponding camera from the one or more cameras 214. As such, by utilizing the one or more LiDAR units 212-alone or in combination with the one or more cameras 214-the anomaly detection system 202 can capture highly accurate 3D data of the agricultural field 104. The one or more LiDAR units 212 can include one or more of rotating LiDAR units, flash LiDAR units, solid-state time of flight LiDAR units, or solid-state frequency-modulated LiDAR units. The one or more LiDAR units 212 may generate LiDAR data.

The LiDAR units 212 may be configured and oriented to capture LiDAR data of the implement 120, operating of the implement 120, and/or of portions of the agricultural field 104 worked by the implement 120. Accordingly, at least some of the LiDAR units 212 are oriented to capture LiDAR data of the implement 120, operation of the implement 120, and/or portions of the agricultural field 104 worked by the implement 120. Each LiDAR unit 212 may be configured to generate LiDAR data.

Additionally, the agricultural vehicle 102 may include one or more radar units 216 operably coupled to the agricultural vehicle 102. In some embodiments, a field of view (FOV) of the one or more cameras 214 is substantially the same (e.g., overlaps) a FOV of the one or more RADAR units 216. In one or more embodiments, the one or more cameras 214 and the one or more radar units 216 are configured to provide a 3D surround stereo view of the surroundings of the agricultural vehicle 102.

The one or more radar units 216 may include a transmitter configured to transmit a high-frequency signal, an antenna configured to broadcast the high-frequency signal, and a receiver configured to receive the high-frequency signal reflected from one or more objects in the environment. The one or more radar units can include one or more of frequency-modulated continuous wave radar units or stepped frequency modulation radar units. The one or more radar units 216 may further include a signal processor configured to determine one or more properties of object(s) from which the high-frequency signal was reflected. The one or more radar units 216 may be configured to scan and receive radar data at a rate within a range of from about 10 Hz to about 50 Hz. However, the disclosure is not so limited, and the scan rate of the one or more radar units 216 may be different than that described. In some embodiments, the scan rate of the one or more radar units 216 may be different than the frame rate of the one or more cameras 214.

A FOV of each of the one or more radar units 216 may be within a range of from about 60° to about 360°, such as from about 60° to about 90°, from about 90° to about 120°, from about 120° to about 180°, or from about 180° to about 360°. However, the disclosure is not so limited, and the FOV of each of the one or more radar units 216 may be different than those described. In some embodiments, the FOV of each of the one or more radar units 216 is substantially the same as the FOV of the remaining one or more radar units 216.

The one or more radar units 216 may include a synthetic aperture RADAR (SAR) or an inverse synthetic aperture radar (ISAR) configured to facilitate receiving relatively higher resolution data compared to conventional RADARs. The one or more radar units 216 may be configured to scan the RADAR signal across a range of angles to capture a 2D representation of the environment, each pixel representing the radar reflectivity at a specific distance and angle. In other embodiments, the one or more radar units 216 includes a 3D radar configured to provide range (e.g., distance, depth), velocity (also referred to as "Doppler velocity"), azimuth angle, and elevational angle. The one or more radar units 216 may be configured to provide a 3D RADAR point-cloud to the anomaly detection system 202.

The radar data may include one or more of analog-to-digital (ADC) signals, a RADAR tensor (e.g., a range-azimuth-doppler tensor), and a RADAR point-cloud. In some embodiments, the output radar data includes a point-cloud, such as a 2D RADAR point-cloud or a 3D RADAR point-cloud (also, simply referred to herein as a "3D point-cloud"). In some embodiments, the output radar data includes a 3D RADAR point-cloud. The radar units 216 may each be configured to generate radar data.

The one or more LiDAR units 212, the one or more cameras 214, the one or more radar units 216, and any other sensors mounted to the agricultural vehicle 102 may directly neighbor one another. For example, in some embodiments, the one or more cameras 214 are located at substantially a same elevation (e.g., height) as the one or more LiDAR units 212 or other sensors, but are laterally spaced therefrom. In other embodiments, the one or more cameras 214 are horizontally aligned (e.g., left and right) with the one or more LiDAR units 212 or other sensors, but is vertically displaced therefrom (e.g., located above or below the one or more LiDAR units 212).

As described above, each of the image data, the LiDAR scan data (the LiDAR data), and the radar data may be of the implement 120, the operation of the implement 120, the agricultural field 104 previously worked by the implement 120, and/or the environment around the agricultural vehicle 102 and the implement 120. For example, the image data, LiDAR data, and the radar data may be of one or more of the tools 254 of the implement 120, the toolbar 252 of the implement 120, the frame 250 of the implement 120, the actuators 258 of the implement 120, other hydraulic systems of the implement 120, and/or other portions of the implement 120. In some embodiments, at least some of the image data, the LiDAR data, and the radar data further is of the agricultural field 104, animals (e.g., livestock, wild animals, domestic animals), humans, crops, rows of crops, trees, weeds, other plants, utility lines, bales of hay, rocks, wind turbines, fences and fence posts, shelter belts (lines of trees), agricultural vehicles (e.g., tractors, planters, sprayers, combiners, harvesters, mowers, trailers, forager), or other living object or inanimate object that may be proximate the agricultural vehicle 102 and implement 100 in the agricultural field 104.

The agricultural vehicle 102 may include the computing device 218 (also referred to as an "electronic control unit" (ECU), a "system controller," or a "computing unit") configured to facilitate one or more control operations (e.g., safety operations, a power, a condition, another property) of the implement 120, the agricultural vehicle 102, and/or agricultural operation. The computing device 218 may include the anomaly detection system 202, and one or more additional controllers 226. In some embodiments, the computing device 218 facilitates one or more control operations of the implement 120 based on the anomaly detection system. While the computing device 218 is illustrated as proximate to the engine compartment 208, such as between the engine compartment 208 and the operator cabin 206, the disclosure is not so limited. The computing device 218 may be operably coupled to the agricultural machine 100 at other locations, such as at other locations of the agricultural vehicle 102. In some embodiments, the computing device 218 is located inside the operator cabin 206, such as proximate to an I/O device 232. In some embodiments, the computing device 218 is located on a device separate from the agricultural vehicle 102 (but located within the agricultural vehicle 102, such as in the operator cabin 206), such as one a tablet, laptop, or other device.

The agricultural vehicle 102 may further include a global navigation satellite system (GNSS) unit 228, an inertial measurement unit (IMU) 230 (which may be different than the IMUs 262), an input/output (I/O) device 232, and a global system for mobile communication (GSM) 234 (e.g., a telecommunication unit). In some embodiments, the I/O device 232 includes a user interface or display device. The I/O device 232 may include one or more devices configured to receiving a user input (e.g., from an operator) of the agricultural vehicle 102 and may include one or more of a keyboard, mouse, microphone, remote control device, button, joystick, trackball, touchpad, lightpen, a speaker, and display device. The I/O device 232 may be configured to receive a user input from the operator of the agricultural vehicle 102 and/or to provide one or more displays to the user. The I/O device 232 displays may include touch screen displays, non-touch screen displays, color displays, non-color displays, or any combination thereof.

While the GNSS unit 228, the IMU 230, and the GSM 234 are illustrated as part of the computing device 218, in other embodiments, one or more of the GNSS unit 228, the IMU 230, the I/O device 232, and the GSM 234 are not part of the computing device 218 and are in operable communication with the computing device 218. For example, the IMU 230 may be operably coupled to a chassis 242 of the agricultural vehicle 102, and one or both of the GNSS unit 228 and the GSM 234 may be operably coupled to the agricultural vehicle 102 external to the computing device 218.

The anomaly detection system 202 may be in operable communication with the IMU 230, the GNSS unit 228, and the GSM 234, in addition to the one or more additional controllers 226 configured to perform one or more control operations of the agricultural vehicle 102, such as one or more navigation controls (e.g., control of steering, acceleration, velocity, braking, and/or navigation of the agricultural vehicle 102). The anomaly detection system 202 may further be in operable communication with the implement controller 272 and/or one or more of the implement sensors (e.g., one or more hydraulic sensors 260, one or more inertial measurement units (IMUs) 262, one or more strain sensors 264 (stain gauges), one or more microphones or microphone arrays 266, and one or more additional sensors 268 (such as one or more speed (ground speed) sensors, sensors to determine whether the implement 120 is receiving power from the agricultural vehicle 102 (e.g., a power take-off sensor), or other sensors)). The anomaly detection system 202 may be configured to facilitate one or more operations of the implement 120. For example, the anomaly detection system 202 may be configured to determine when the implement 120 is operating outside of normal operating conditions and is not operating as intended. The anomaly detection system 202 may be configured to facilitate safe operation of the implement 120 and reduce the amount of time that the implement 120 operates sub-optimally, such as times when the implement 120 does not perform an intended agricultural operation as intended. For example, the anomaly detection system 202 may be configured to detect deviations in normal operating conditions of the implement 120 and provide a notification of such conditions, such as to a location in the operator cabin 206 and/or stop the agricultural vehicle 102 and/or the implement 120. By stopping the implement 120 responsive to determining that the implement 120 is not operating within desired (e.g., designed) operating conditions, the anomaly detection system 202 may facilitate improved operation of the agricultural field 104 (and, for example, improved crop yields), improved safety of agricultural workers, and/or improved (increased) equipment life by reducing the times that the implement 120 is operating outside of design thresholds.

By way of non-limiting example, the anomaly detection system 202 may be configured to control operations of the implement 120 (e.g., reduce or prevent operation of the implement 120 outside of a predetermined operating window) based on data from one or more of the cameras 214, the one or more LiDAR units 212, and/or the one or more radar units 216, to stop operation of the implement 120, to provide a display providing an indication that the implement 120 is operating outside of the predetermined operating window to the I/O device 232 (such as on a graphical user interface), and to provide one or more anomaly predictions indicative of undesired operation of the implement 120, for example. In some embodiments, the anomaly detection system 202 is configured to determine one or more anomalies associated with operation of the implement 120 based on image data from one or more of the cameras 214 and/or on LiDAR data from the one or more LiDAR units 212.

The anomaly detection system 202 may be in operable communication with the one or more cameras 214, the one or more LiDAR units 212, the one or more RADAR units 216, and any other sensors operably mounted to the agricultural vehicle 102 such as by wired or wireless communication. In addition, the anomaly detection system 202 may be in operable communication with the implement sensors described above. In some embodiments, responsive to determining that one or more conditions of the implement 120 falls outside of a threshold operating window or range, the anomaly detection system 202 may gather spatial data (e.g., one or more of image data, LiDAR data, or radar data) with one or more of the spatial sensors (e.g., one or more of the cameras 214, the LiDAR units 212, and/or the radar units 216) and apply an anomaly detection deep neural network to the spatial data to generate one or more anomaly predictions associated with the implement 120. The anomaly detection system 202 may be configured to receive data from any of these spatial sensors and facilitate anomaly detection in connection with the received data. To illustrate, the anomaly detection system 202 can apply various types of machine learning models to combinations of the sensor data acquired from the spatial sensors, and other sensors to generate digital representations of the implement 120 and the agricultural field 104 previously worked by the implement 120.

In some embodiments, the anomaly detection system 202 is configured to predict one or more implement anomalies based on the implement sensor data from the implement sensors. For example, the anomaly detection system 202 may apply an anomaly detection deep neural network to the implement sensor data received by the implement sensors to predict one or more anomalies in the implement sensor data. Responsive to predicting the one or more anomalies in the implement sensor data, the anomaly detection system 202 may apply an anomaly detection deepen neural network (which may be the same as or different than the anomaly detection deep neural network applied to the implement sensor data) to the spatial data from the spatial sensors to predict one or more anomalies associated with operation of the implement 120 based on the spatial data. In some such embodiments, the implement sensor data may trigger operation of the anomaly detection system 202 to detect one or more anomalies associated with operation of the implement 120 based on the spatial data.

In some embodiments, the anomaly detection system 202 generates point-cloud datasets based on the sensor data and segments the point-cloud datasets according to anomaly predictions generated by the one or more machine learning models to precisely identify, categorize, and locate any anomalies in the implement 120, the agricultural field 104 worked by the implement 120, and/or the operation of the implement 120. Based on these determinations, the anomaly detection system 202 can further control operations of the agricultural machine 100 to stop operation of the implement 120 until the anomalous operation of the implement 120 is resolved, make route changes of the agricultural vehicle 102, sound an alarm associated with the agricultural vehicle 102 and/or the implement 120, and more.

The one or more additional controllers 226 may include one or more of a speed controller, a track adjustment controller, a height adjustment controller, and a controller for facilitating one or more agricultural operations of the implement 120 (e.g., a planting operation, a spreading operation, a spraying operation, a bailing operation, a cutting operation, a harvesting operation, or another operation).

In some embodiments, the GNSS 228 is in operable communication with a receiver 240. In some embodiments, the GNSS 228 includes a global positioning system (GPS) and the receiver 240 includes a GPS receiver. The receiver 240 may be configured for determining a position of the agricultural vehicle 102 and/or the implement 120 during operation of the agricultural vehicle 102 (e.g., during traversal of the agricultural field 104 with the agricultural vehicle 102 and/or during capturing of image data with the one or more cameras 214 and capturing of radar data with the one or more radar units 216).

The IMU 230 may be operably coupled to the agricultural vehicle 102, such as to a chassis 242 of the agricultural vehicle 102. The computing device 218 may be in operable communication with and configured to receive data from the IMU 230. The IMU 230 may be configured to measure one or more of a specific force, an angular rate, and an orientation of the agricultural vehicle 102 and may include at least one of each of an accelerometer, a gyroscope, and a magnetometer. The IMU 230 may be configured to facilitate determining one or more of a linear acceleration of the agricultural vehicle 102, a direction of travel of the agricultural vehicle 102, rotational rates and angular velocity, and a strength and direction of a magnetic field. In some embodiments, each of three mutually orthogonal axes (e.g., the pitch, roll, and yaw) of the agricultural vehicle 102 include an accelerometer, a gyroscope, and a magnetometer.

The GSM 234 may include a digital mobile network and may facilitate digital communications between the agricultural vehicle 102 (e.g., the computing device 218, the anomaly detection system 202, and the one or more additional controllers 226).

In some embodiments, an object 244 (which may also be referred to as an "alignment object" or a "reference object") may be located on the agricultural vehicle 102 and may include a reference for alignment of data from the one or more cameras 214, the one or more LiDAR units 212, the one or more radar units 216, and any other sensors. In some embodiments, the object 244 is located on the ground of the agricultural field 104. In other embodiments, the object 244 is fixedly coupled to the agricultural vehicle 102 and in the FOV of at least one of the one or more cameras 214 and at least one of the one or more radar units 216.

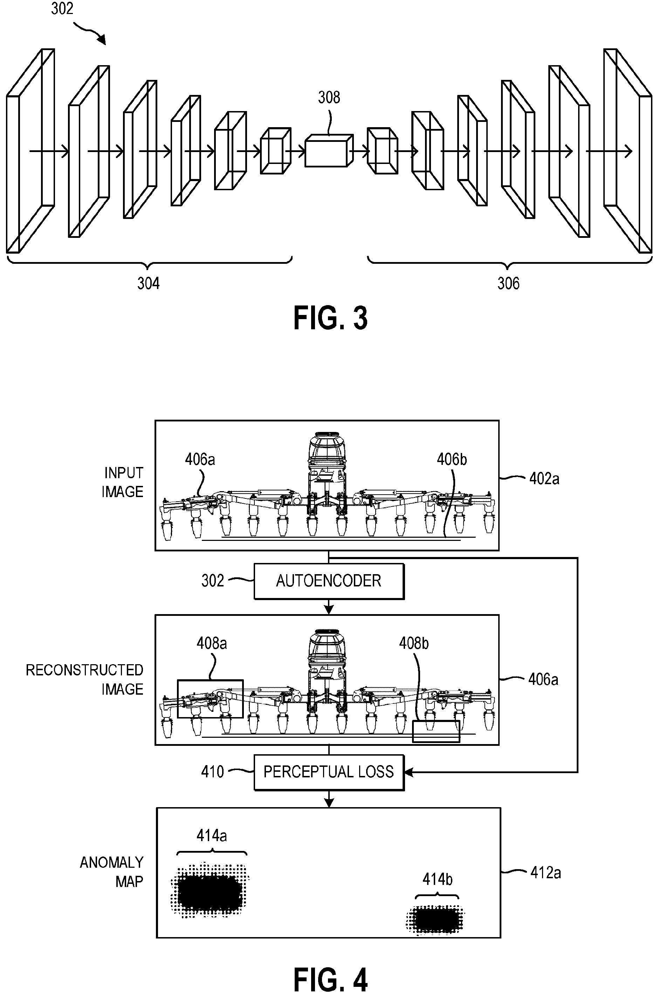

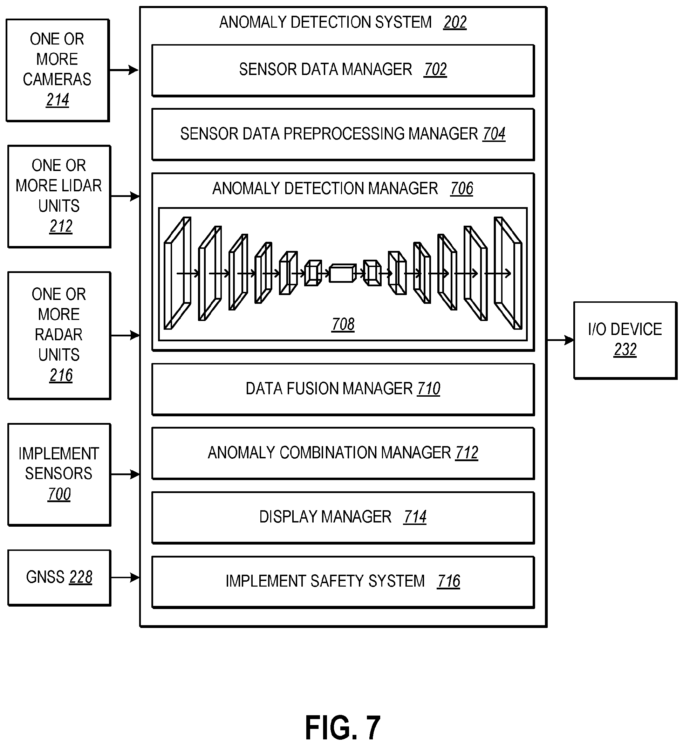

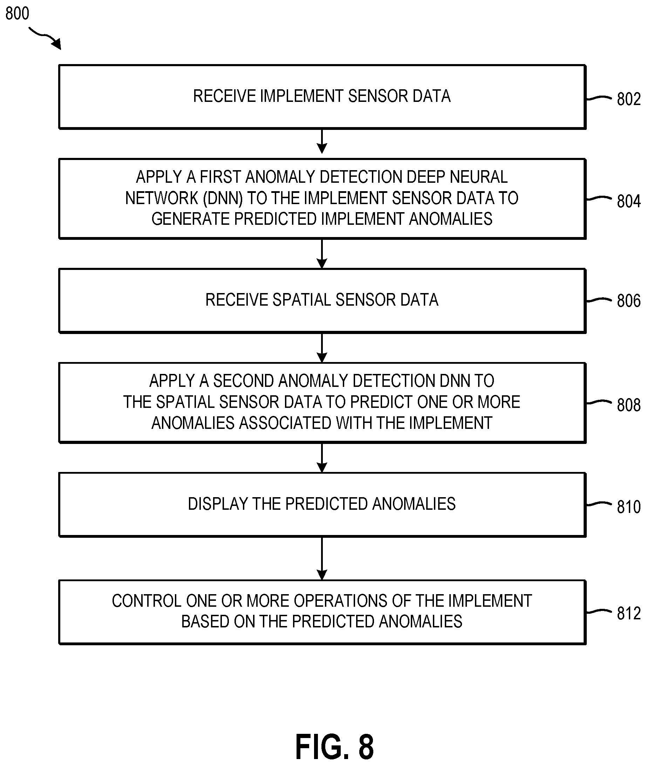

As mentioned above, the anomaly detection system 202 utilizes data from various sensors operably coupled to the agricultural vehicle 102 and/or the implement 120 to robustly and accurately detect a wide range of anomalies associated with the implement 120. For example, the anomaly detection system 202 may utilize data from the implement sensors to trigger application of an anomaly detection DNN to spatial data to detect one or more anomalies in the implement 120 and/or in the agricultural field 104 worked by the implement 120. FIG. 3 through FIG. 6 provide an overview of how the anomaly detection system 202 detects these anomalies. FIG. 7 provides additional detail related to specific implementations of the anomaly detection system 202. FIG. 8 provides an overview of a method of detecting anomalies associated with the implement 120 during operation of the implement 120 and controlling one or more operations of the implement 120 based on the detected anomalies. of detecting anomalies and controlling operations of the implement 120 and the agricultural vehicle 102 based on the detected anomalies.

In one or more embodiments, the anomaly detection system 202 implements an auto-encoder 302, such as illustrated in FIG. 3. For example, while other object detectors are limited to a predefined set of classes, the anomaly detection system 202 trains and maintains the auto-encoder 302 to recognize deviations from an established baseline pattern. In this way the auto-encoder 302 can detect a wide range of anomalies without being trained with a large and/or annotated training set. In some embodiments, the anomaly detection system 202 implements the auto-encoder to recognize deviations in one or more conditions and/or operating parameters of the implement 120 measured by one or more of the implement sensors. As described above, the anomaly detection system 202 may implement the auto-encoder responsive to determining, based on data from one or more of the implement sensors (e.g., one or more of the hydraulic sensors 260, one or more IMUs 262, one or more strain sensors 264, one or more microphones or microphone arrays 266, and one or more additional sensors 268), that the implement 120 is operating outside of normal operating parameters.

In more detail, as shown in FIG. 3, the auto-encoder 302 (sometimes called an encoder-decoder) can include an encoder 304 and a decoder 306. In one or more embodiments, anomaly detection system 202 trains the auto-encoder 302 to encode (i.e., with the encoder 304) input data into a lower-dimensional representation (e.g., latent space) and then decode (i.e., with the decoder 306) it into a representation of the original input. For example, the encoder 304 can compress the input data into a smaller representation 308 of itself. The decoder 306 then reconstructs the original input from this smaller representation. This reconstruction is based on how the anomaly detection system 202 trains the auto-encoder 302.

In one or more embodiments, the anomaly detection system 202 trains the auto-encoder 302 on a dataset containing normal or typical sensor data associated with agricultural settings. For example, this dataset can include implement sensor data from respective implement sensors during normal operation of the implement 120 (e.g., with no anomalies when the implement 120 is operating as intended and within an intended operating window), spatial data (e.g., image data, video data, LiDAR data, radar data) of normal operation of the implement 120 (e.g., with no anomalies), spatial data of the agricultural field 104 worked by the implement 120 during normal operations of the implement 120, and so forth. The dataset may include implement sensor from one or more of the implement sensors indicative of an operating condition of the implement 120 and may include one or more of speed (ground speed) data of the implement 120, hydraulic data of one or more hydraulic systems and/or hydraulic lines of the implement 120, power take-off (PTO) data of the implement 120 (e.g., whether the implement 120 is currently powered by the agricultural vehicle 102), IMU data of the implement 120 and/or the agricultural vehicle 102, strain data of the implement 120, sound data of the implement 120 or proximate the implement 120, and/or other data of the implement 120 and/or associated with operation of the implement 120. Generally, training seeks to minimize the difference between the data input into the encoder 304 of the auto-encoder 302 and the reconstructed data generated by the decoder 306 of the auto-encoder 302. As a result of being trained on this "normal" data related to agricultural fields, the auto-encoder 302 learns to identify anomalies including anything that may be abnormal or anomalous in new (e.g., unlearned) agricultural field data. In one or more implementations, and unlike standard model training, training the auto-encoder 302 does not require a large dataset or annotated input data. Instead, the anomaly detection system 202 trains the auto-encoder 302 to generate reconstructed data that includes areas of poor reconstruction where anomalies exist in the underlying input.

To illustrate, FIG. 4 provides an overview of the anomaly detection system 202 identifying areas of anomaly in an input image 402a. For example, the input image 402a may be captured by the one or more cameras 214 mounted on the agricultural vehicle 102. As shown in the input image 402a, the agricultural field 104 may include additional vehicles 404a, 404b that surround the agricultural vehicle 102. In some embodiments, the input image 402a may include the implement 120 of the agricultural machine 100. In this example, the anomaly detection system 202 can generate an input vector from the input image 402a and apply the auto-encoder 302 to the generated input vector. As discussed above, the encoder 304 of the auto-encoder 302 can compress the input vector into a smaller representation 308, and then the decoder 306 of the auto-encoder 302 can generate a reconstructed image 406a that represents the original input image 402a. In one or more implementations, the auto-encoder 302 generates the reconstructed image 406a with areas 408a, 408b of poor reconstruction. The areas of poor reconstruction may represent areas of the implement 120 operating outside of normal operating conditions and/or areas of the agricultural field 104 worked by the implement 120 when the implement 120 was operating sub-optimally (outside of the predetermined operating window). As discussed above, these areas 408a, 408b of poor reconstruction indicate that the auto-encoder 302 found anomalous or unexpected data in those areas of the input image 402a. In the example shown in FIG. 4, the detected anomalies include a small vehicle and a larger agricultural vehicle in the agricultural field 104 near the agricultural vehicle 102. The areas 408a, 408b of poor reconstruction may include areas of the agricultural field 104 where the implement 120 has worked in a sub-optimal manner and/or may include portions of the implement 120 that are operating outside of normal operating ranges. In some embodiments, the detected anomalies include an indication of anomalous operation of the implement 120. For example, when the implement 120 operates outside of a threshold operating range, the implement 120 may exhibit one or more anomalies and/or the agricultural field 104 worked by the implement 120 may exhibit one or more anomalies. In some embodiments, the ploughed soil or the harrowed soil may not be sufficiently turned up (mixed) and/or may include agglomerations that are larger than a threshold, which may be identified by the auto-encoder 302; the spacing of seeds may fall outside of a desired window (e.g., be too close together or too far apart) and/or may not be at a desired depth; a sprayer nozzle may not have a desired spray patter; a fertilizer may be applied at a rate and/or a spacing falling outside of a desired window; an irrigation pattern may fall outside of a desired operating window (range); a mower may leave portions of the agricultural field 104 un-mowed and/or may spread the mowed grass and/or plants in an undesired pattern; a tedder may spread hay or silage in an undesired pattern; a cultivator may not sufficiently loosen soil and may leave clumps or agglomerations larger than a predetermined size; a rake may not create windrows having a desired size, shape, and/or pattern; a baler may create a bale having an undesired size, shape, and/or pattern; a mulcher may not spread the mulch in a desired pattern; or a harvester may not sufficiently gather mature crop. Of course, the detected anomalies may include any anomaly indicative of malfunctioning or sub-optimal operation of the implement 120.

In one or more embodiments, the anomaly detection system 202 applies one or more perceptual loss functions 410 (or reconstruction loss functions, such as feature reconstruction loss functions and/or reconstruction loss functions of non-feature-based losses) to the reconstructed image 406a. For example, the perceptual loss functions 410 are applied to compare the entire input image 502a to the reconstructed image 506a to determine the areas 508a-508c of poor reconstruction. In some embodiments, the anomaly detection system 202 can utilize the one or more perceptual loss functions 410 to compare the areas 408a, 408b to additional, specific features. To illustrate, the one or more perceptual loss functions 410 may compare the areas 408a, 408b to known anomalies such as anomalies in the operation of the implement 120 and the resulting condition of the agricultural field 104 responsive to the sub-optimal operation of the implement 120; portions of the implement 120 that are operating sub-optimally and/or exhibiting conditions that fall outside of a threshold operating window (in an anomalous operating window); and anomalies such as vehicles, humans, animals, and other objects and obstacles. In at least one embodiment, the one or more perceptual loss functions 410 can generate an anomaly map 412a. For example, the anomaly map 412a can include heat map features where anomalies 414a, 414b are indicated within the anomaly map 412a are different or "hotter" colors. In additional implementations, the anomaly map 412a may include bounding boxes associated with the anomalies 414a, 414b indicating predicted edges of the anomalies 414a, 414b, and/or scores associated with the anomalies 414a, 414b indicating how likely it is that the geographic areas surrounding the agricultural vehicle 102 and corresponding to the predicted anomalies 414a, 414b actually include agricultural anomalies.

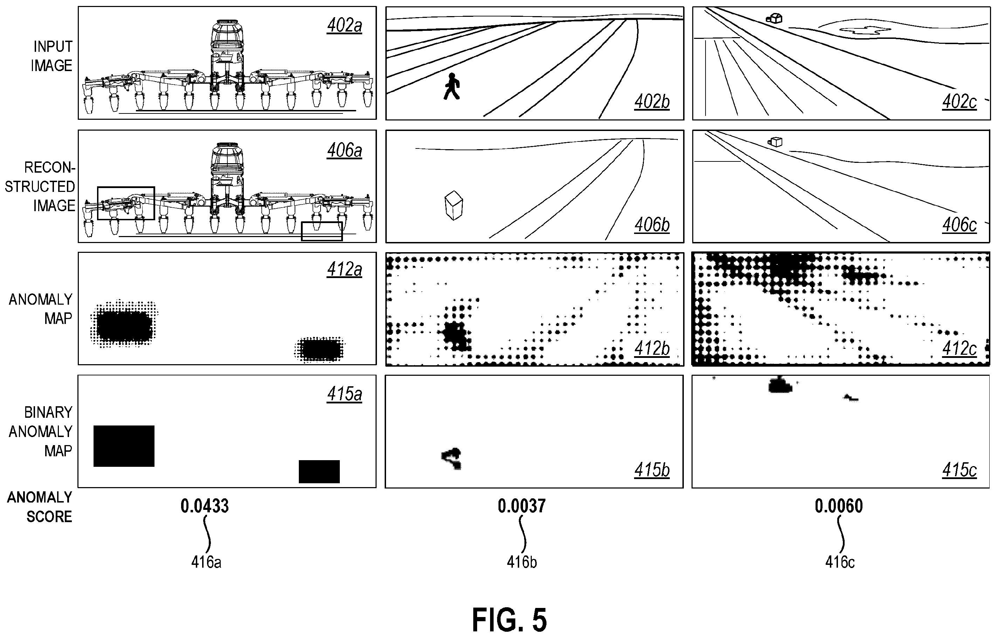

In more detail, FIG. 5 illustrates additional information associated with the anomaly detection process based on spatial data (e.g., image data). For example, the anomaly detection system 202 applies the auto-encoder 302 to the input images 402b, 402c in addition to the input image 402a to generate the reconstructed images 406a, 406b, and 406c. As discussed above, the reconstructed images 406a-406c include areas of poor reconstruction. In response to further applying one or more perceptual loss functions 410 to the reconstructed images 406a-406c, the anomaly detection system 202 generates anomaly maps 412a, 412b, and 412c, respectively. As discussed above, the anomaly maps 412a-412c can function as heat maps where predicted anomalies have a "hotter temperature" than surrounding areas.

As further shown in FIG. 5, in at least one embodiment, the anomaly detection system 202 can further generate binary anomaly maps 415a, 415b, 415c, respectively, from the anomaly maps 412a-412c. For example, the anomaly detection system 202 can generate the binary anomaly maps 415a-415c by thresholding the anomaly maps 512a-512c (e.g., at the pixel level) and applying morphological operations as a post-processing operation. In some embodiments, the anomaly detection systems generate the binary anomaly maps 415a-415c by determining outer edges of the "hot" areas in the anomaly maps 412a-412c. The anomaly detection system 202 can then mask the pixels within these outer edges with a single color (e.g., white), and mask the pixels outside these outer edges with a different color (e.g., black). In some embodiments, the anomaly detection systems generate the binary anomaly maps 415a-415c by clustering methods and/or deep learning approaches.

Additionally, as shown in FIG. 5, anomaly detection system 202 can also generate anomaly scores 416a, 416b, and 416c, respectively for the anomalies detected in connection with the input images 402a-402c. For example, the anomaly detection system 202 can utilize the intensity of the "hot" areas in the anomaly maps 412a-412c in combination with the size of the masked areas in the binary anomaly maps 415a-415c to generate the anomaly scores 416a-416c. In one or more implementations, the anomaly scores 416a-416c indicate a likelihood that the corresponding input images 402a-402c depict an anomaly. Additionally or alternatively, the anomaly scores 416a-416c can indicate a severity, size, or speed of a predicted anomaly depicted in each of the input images 402a-402c.

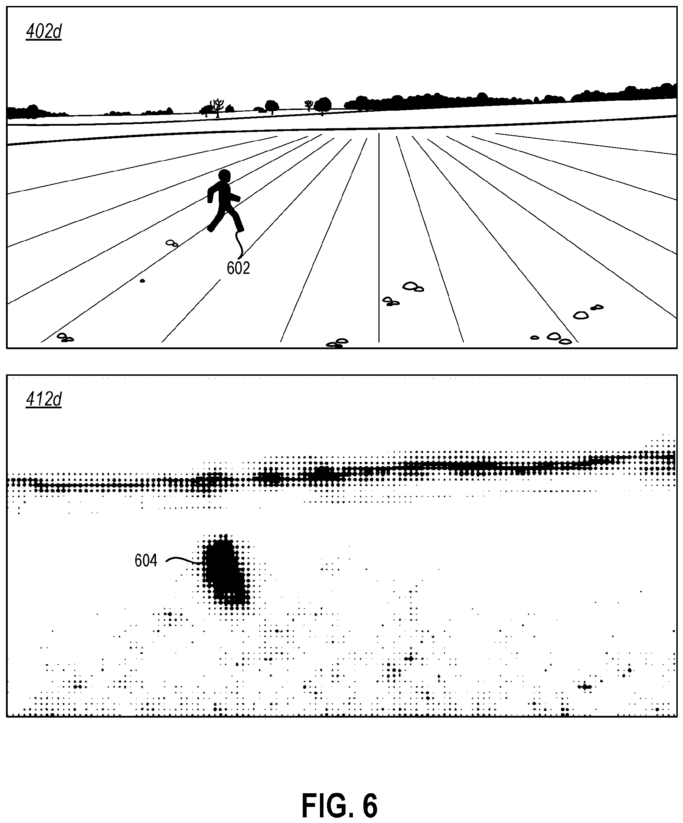

To further illustrate, as shown in FIG. 6, an input image 402d can depict a person 602 walking in front of the agricultural vehicle 102 in the agricultural field 104. The anomaly detection system 202 can apply the auto-encoder 302 to the input image 402d to generate the anomaly map 412d. In one or more implementations, the heat or color intensity of the area 604 in the anomaly map 412d can indicate both that an anomaly is present in that area, and that the severity of that anomaly (e.g., relative to the agricultural vehicle 102) is high because the anomaly is moving at a speed that is slower than that of the agricultural vehicle 102 moving toward the anomaly-indicating a possible collision. As mentioned above, the anomaly detection system 202 can perform one or more safety or security actions based on this severity such as slowing the agricultural vehicle 102, stopping the agricultural vehicle 102, sounding an alarm within the agricultural vehicle 102, flashing one or more displayed components on the I/O device 232 inside the agricultural vehicle 102, and so forth.

While FIG. 3 through FIG. 6 illustrate how the anomaly detection system 202 detects anomalies in connection with input images captured by the one or more cameras 214 on the agricultural vehicle 102, the anomaly detection system 202 can similarly detect anomalies in connection with other types of sensor data. For example, the anomaly detection system 202 can train the auto-encoder 302 to detect anomalies in sensor data from the one or more LiDAR units 212, the one or more radar units 216, and so forth. Additionally, the anomaly detection system 202 can also train the auto-encoder 302 to detect anomalies in combinations of sensor data from any of the sensors discussed herein.

In some embodiments, the auto-encoder 302 is trained based on sensor data from one or more of the implement sensors, which may include one or more of the hydraulic sensors 260, one or more of the IMUs 262, one or more strain sensors 264, one or more microphones or microphone arrays 266, one or more additional sensors 268, and additional sensors configured to measure operating parameters of the agricultural machine 100 and/or the implement 120 (such as speed sensors, PTO sensors, other sensors). As used herein, the implement sensor data includes sensor data from one or more of the implement sensors 700.

In some embodiments, the anomaly detection system 202 includes an auto-encoder 302 for each of the implement sensors and the auto-encoder 302 associated with a particular sensor is configured to detect anomalies in connection with sensor data from the particular implement sensor. In some embodiments, the anomaly detection system 202 may include an auto-encoder 302 trained to detect anomalies in hydraulic data from the one or more hydraulic sensors 260, an auto-encoder 302 trained to detect anomalies in IMU data from the one or more of IMUs 262; an auto-encoder 302 trained to detect anomalies in strain data from one or more of (e.g., each of) the strain sensors 264; an auto-encoder 302 trained to detect anomalies in sound data from one or more of (e.g., each of) the microphone arrays 266; and/or an auto-encoder 302 trained to detect anomalies in additional sensors from one or more of (e.g., each of) the additional sensors 268. By way of non-limiting example, each auto-encoder 302 may be trained on normal sensor data from each of the implement sensors to learn to compress and accurately reconstruct the sensor data. When new sensor data is provided to the trained auto-encoder 302, the trained auto-encoder 302 may reconstruct the new sensor data and calculate the error between the original new sensor data and the reconstructed data to determine the reconstruction error. The trained auto-encoder 302 may detect anomalies in the sensor data responsive to the reconstruction error being larger than a threshold determined or set during training of the auto-encoder 302.

As discussed above, the anomaly detection system 202 detects anomalies across a wide variety of agricultural scenarios and implementations based on the implement sensor data, the image data, and/or the LiDAR data. FIG. 7 illustrates an embodiment of the anomaly detection system 202 operating in connection with the agricultural vehicle 102 and the agricultural field 104. For example, FIG. 7 illustrates how the anomaly detection system 202 can use data from one implement sensors 700 (one or more of the hydraulic sensors 260, the IMUs 262, the strain sensors 264, the microphone arrays 266, the additional sensors 268, and/or other sensors coupled to the agricultural machine 100, such as speed sensors, PTO sensors, or other sensors); apply an anomaly detection deep neural network to the implement sensor data from each of the implement sensors 700 to predict anomalies in the operation of the implement 120 based on the implement sensor data; use spatial data from one or more cameras 214, one or more LiDAR units 212, and/or one or more radar units 216; detect anomalies within the spatial data (e.g., the image data, the LiDAR data, the radar data); apply an anomaly detection deep neural network to the spatial data from each of the cameras 214 to predict anomalies based on the spatial data from each of the camera 214; and control one or more operations of the agricultural machine 100 (e.g., the implement 120) based on the anomalies associated with the operation of the implement 120 and/or the anomalies in the spatial data, control one or more operations of the agricultural machine 100.

In more detail, a sensor data manager 702 of the anomaly detection system 202 can receive implement sensor data from one or more implement sensors 700; spatial data from the one or more cameras 214, the one or more LiDAR units 212, one or more radar units 216; and additional sensor data from other sensors (e.g., the GSM 234, the IMU 230). In some embodiments, the anomaly detection system 202 receives data from the GNSS unit 228. The sensor data manager 702 may receive implement sensor data from the implement sensors 700. In addition, the sensor data manager 702 may receive digital images (image data) captured by the one or more cameras 214-either individually or in sequences. Additionally, in some embodiments, the sensor data manager 702 can receive one or more scans from the one or more LiDAR units 212. In some embodiments, the sensor data manager 702 can synchronize the received sensor data such that images and LiDAR scans are grouped together by the same or similar timestamps.

In some embodiments, the anomaly detection system 202 further includes a sensor data preprocessing manager 704. In one or more implementations, the sensor data preprocessing manager 704 preprocesses implement sensor data and the spatial data (e.g., the LiDAR data scan sequences and/or radar scan sequences (if the sensor data includes LiDAR data and radar data)) prior to anomaly detection. For example, the sensor data preprocessing manager 704 can filter noise and irrelevant information out of the implement sensor data, and the LiDAR and/or RADAR scan sequences. Additionally, the sensor data preprocessing manager 704 can align the LiDAR and/or radar scan sequences in a common coordinate system thus synchronizing temporal data with the spatial data represented in the scan sequences. By way of non-limiting example, preprocessing of the sequence of LiDAR scans and the sequence of radar scans can include one or more of: filtering noise out of the sequence of LiDAR scans and the sequence of radar scans, aligning the sequence of LiDAR scans and the sequence of radar scans to a common coordinate system, and synchronizing sequence of LiDAR scans and the sequence of radar scans.

In one or more embodiments, the sensor data preprocessing manager 704 can synchronize the sensor data received by the GNSS unit 228 and other sensors. For example, the sensor data preprocessing manager 704 can utilize the GNSS time references (e.g., PTP or PPS) associated with each GNSS reading to synchronize sensor data from the implement sensors, the one or more cameras 214, the one or more radar units 216, and the one or more LiDAR units 212. To illustrate, the sensor data preprocessing manager 704 can identify a GNSS time reference for a first GNSS data input, identify a first spatial data input (a first image data input) with a timestamp that corresponds to the GNSS time reference, and match the first GNSS data input with the first spatial data input. The GNSS time reference may include a precision time protocol (PTP) time reference or a pulse-per-second (PPS) time reference. In at least one implementation, this synchronization helps to ensure accurate alignment of spatial information with the GNSS data. In other words, the spatial data (e.g., the image data) may be aligned with GNSS data (global coordinate data).

In one or more embodiments, an anomaly detection manager 706 can generate an input vector from the implement sensor data and/or the spatial data received by one or more of the sensor data manager 702 or the sensor data preprocessing manager 704. For example, the anomaly detection manager 706 can train and maintain an anomaly detection deep neural network (DNN) 708 that detects anomalies in agricultural sensor data and/or in the spatial data (e.g., the spatial data of the agricultural field 104 and/or the implement 120). As such, the anomaly detection manager 706 can generate an input vector for an anomaly detection DNN 708 from the sensor data (e.g., the spatial data, the implement sensor data, the preprocessed spatial data, the preprocessed implement sensor data) where features of the sensor data are represented in the input vector. The anomaly detection manager 706 can then apply the anomaly detection DNN 708 to the input vector to generate one or more anomaly predictions associated with the agricultural field 104 and/or the implement 120 indicative of operating conditions of the implement 120. In one or more embodiments, the anomaly detection DNN 708 includes an auto-encoder (e.g., the auto-encoder 302 as shown in FIG. 3).

In some embodiments, the anomaly detection manager 706 applies the anomaly detection DNN 708 to different types of sensor data individually. For example, in one embodiment, the anomaly detection manager 706 applies the anomaly detection DNN 708 to an anomaly detection DNN 708 to an input vector generated with only data provided by one or more of the implement sensors to generate one or more implement-based anomaly predictions associated with the implement 120; and applies a separate anomaly detection DNN 708 to an input vector generated with only the data provided by one or more spatial sensors (e.g., one or more of the cameras 214, one or more of the LiDAR units 212, and/or one or more of the radar units 216) to generate one or more spatial-based (e.g., image-based, LiDAR-based, radar-based) anomaly predictions associated operation of the implement 120 and/or associated with the implement 120. In some embodiments, the anomaly detection manager 706 includes an anomaly detection DNN 708 associated with each of the implement sensors and an anomaly detection DNN 708 associated with each of the spatial sensors. Each of the anomaly detection DNNs 708 are trained with a unique dataset (e.g., from the implement sensors) that is different than the unique dataset (from other implement sensors, from the spatial sensors) used to train the other anomaly detection DNNs 708.

As discussed above, in one or more implementations, the anomaly detection DNN 708 includes an encoder-decoder computational model (e.g., the auto-encoder 302 discussed above in connection with FIG. 3). In at least one implementation, the anomaly detection system 202 trains each of the anomaly detection DNNs 708 on typical (e.g., non-anomalous) agricultural sensor data (the implement sensor data, the spatial data) until the anomaly detection DNN 708 learns to recognize features in agricultural sensor data that are not typical (e.g., anomalous). Thus, in some implementations, the anomaly detection DNN 708 generates anomaly predictions that indicate both the item of sensor data that was anomalous (e.g., a condition of the implement 120 measured by an implement sensor, an area in a digital image, a portion of a LiDAR scan) and a certainty score indicating the likelihood that that item of sensor data contains an anomaly. In some implementations, the anomaly detection DNNs 708 may each include a different type of machine learning model (e.g., different than the encoder-decoder) such as a convolutional neural network, transformer, a recurrent neural network (RNN), a long short-term memory (LSTM) network, or a hybrid network.

In some implementations, the anomaly detection manager 706 trains and maintains a single anomaly detection DNN 708 to apply to various types of sensor data input vectors. For example, the anomaly detection manager 706 can train the anomaly detection DNN 708 across a range of sensor data types to generate anomaly predictions associated with any type or combination of input sensor data. Additionally or alternatively, the anomaly detection manager 706 can train and maintain separate anomaly detection DNNs 708 that are each specific to a single type of input data. In that implementation, for example, the anomaly detection manager 706 can apply an anomaly detection DNN 708 that is specific to spatial data to a digital spatial-based input vector to generate one or more spatial-based anomaly predictions. In some embodiments, the anomaly detection manager 706 can apply an anomaly detection DNN 708 that is specific to implements sensor data to generate one or more implement sensor-based anomaly predictions.

In some embodiments, the anomaly detection manager 706 is configured to apply a first anomaly detection DNN 708 to implement sensor data from one or more of the implements sensors to predict anomalies associated with the implement 120 (such as when the implement 120 is operating sub-optimally, not as intended, and/or outside of a predetermined operating range). Responsive to determining the presence of a predicted anomaly associated with the implement 120, the anomaly detection manager 706 may apply a second anomaly detection DNN 708 to spatial data (e.g., image data, LiDAR data, radar data) from one or more spatial sensors (e.g., one or more of the cameras 214, the LiDAR units 212, and/or the radar units 216) to predict anomalies associated with the implement 120 and/or anomalies in the agricultural field 104 indicative of sub-optimal operation of the implement 120.

In some embodiments, as further shown in FIG. 7, the anomaly detection system 202 may further include a data fusion manager 710. In one or more implementations, the data fusion manager 710 works in parallel or in sequence with the anomaly detection manager 706. For example, the data fusion manager 710 can fuse the sensor data received by the sensor data manager 702 into a point-cloud dataset. As used herein, a point-cloud dataset refers to a collection of data points defined in a three-dimensional coordinate system. As such, the data fusion manager 710 can generate the point-cloud dataset from the received sensor data by synchronizing the different types of spatial sensor data for spatial alignment, and then combining features of the spatial sensor data with extended metadata indicating a three-dimensional position of each pixel relative to the implement 120 and/or the agricultural vehicle 102.

To illustrate, the sensor data manager 702 may receive both LiDAR sensor data from the one or more LiDAR units 212 and image-based sensor data from the one or more cameras 214. In one or more implementations, the data fusion manager 710 can synchronize the LiDAR sensor data and the image-based sensor data for spatial alignment such that images taken at a particular position relative to the implement 120 are synchronized with LiDAR sensor data captured at the same position relative to the implement 120. The anomaly detection manager 706 can then combine features of the LiDAR data across pixels of the image data with extended metadata to generate combined feature data that indicates a three-dimensional position of each pixel relative to the implement 120.

In some embodiments, the sensor data manager 702 can acquire sensor data from other types of sensors. For example, the sensor data manager 702 can acquire data from the implement sensor(s) 700 and can further fuse the implement sensor data with the point-cloud dataset such that the point-cloud dataset represents additional spatial and relational information associated with the one or more LiDAR-based anomaly predictions and the one or more image-based anomaly predictions. In some embodiments, the anomaly detection manager 706 applies the anomaly detection DNN 708 to the combined feature data (the fused data) to generate the anomaly predictions associated with the implement 120.

In one or more embodiments, the anomaly detection system 202 includes an anomaly tracking manager 712. For example, the anomaly tracking manager 712 can utilize any of various tracking methods to track dynamic anomalies indicated by the one or more anomaly predictions. The anomaly tracking manager 712 can utilize tracking methods including camera-based tracking methods, LiDAR-based tracking methods, or combined sensor-based tracking methods. The anomaly tracking manager 712 may be used to track dynamic movement of the implement 120, such as dynamic anomalies associated with the implement 120.

As just mentioned, the anomaly tracking manager 712 can track dynamic anomalies indicated by the one or more anomaly predictions using camera-based tracking methods. For example, the anomaly tracking manager 712 can utilize optical-flow methods including, but not limited to, Lucas-Kanade or Gunnar-Fameback to track a dynamic anomaly over time via the one or more cameras 214 that are mounted or coupled to the agricultural vehicle 102. Additionally or alternatively, the anomaly tracking manager 712 can utilize feature-based methods that track dynamic anomalies using features extracted from camera images to identify the dynamic anomalies in the images and then match the dynamic anomalies across consecutive frames. For example, the anomaly tracking manager 712 can utilize feature-based methods such as, but not limited to SIFT, SURF, or ORB.

As mentioned above, the anomaly tracking manager 712 can track dynamic anomalies using LiDAR-based tracking methods. For example, the anomaly tracking manager 712 can perform scan matching by comparing consecutive LiDAR scans to estimate the motion of the detected anomalies. Additionally, the anomaly tracking manager 712 can utilize methods such as PointRCNN with extensions to track anomalies in point-cloud data, extended to handle dynamic anomalies. Furthermore, the anomaly tracking manager 726 can utilize methods such as Iterative Closest Point (ICP) that aligns point-clouds from consecutive LiDAR scans to estimate motion of detected anomalies.

Also as mentioned above, the anomaly tracking manager 712 can track dynamic anomalies using combined sensor-based tracking methods. For example, the anomaly tracking manager 712 can utilize sensor fusion techniques that combine data from multiple sensors, such as the one or more cameras 214 and the one or more LiDAR units 212 to improve tracking accuracy and robustness. Additionally, the anomaly tracking manager 712 can utilize techniques such as Kalman filtering and Extended Kalman filtering to estimate the state of a tracked dynamic anomaly based on a system model and the observed measurements from multiple sensors. Finally, the anomaly tracking manager 712 can utilize particle filtering (e.g., a Monte Carlo method) to track dynamic anomalies by incorporating data from multiple sensors to estimate the state of the tracked dynamic anomalies.

As further shown in FIG. 7, the anomaly detection system 202 includes a display manager 714. In one or more embodiments, the display manager 714 generates one or more displays for the I/O device 232 associated with anomalies associated with the implement 120 and/or operation of the implement 120. For example, once the anomaly detection manager 706 detects one or more anomalies in the implement sensor data, the display manager 714 may display an indication of the anomaly in the implement sensor data, such as on a graphical user interface (GUI). Further, responsive to the anomaly detection manager 706 detecting one or more anomalies in the implement sensor data, the anomaly detection manager 706 may predict anomalies in the implement 120 based on the spatial data from one or more spatial sensors and generate a display that highlight the predicted anomalies in the implement 120 and/or in the anomalous portions of the agricultural field 104 worked by the implement 120. In more detail, the display manager 714 can highlight the position of anomalies relative to a current position of the implement 120, relative to a path or route that the agricultural vehicle 102 is currently on, and/or relative to a normal operating condition of the implement 120. The display manager 714 can generate the display using highlight colors, bounding boxes, animations, or any other highlighting technique.

The display manager 714 can generate the display using highlight colors, bounding boxes, animations, or any other highlighting technique. In some embodiments, the display manager 714 generates the display using different colors, animations, and/or highlighting for each of the predicted implement anomalies. In at least one embodiment, the display manager 714 is configured to generate heatmaps, bounding boxes, segmentation masks, and so forth for the predicted anomalies based on whether the predicted anomaly is of the implement 120 or the agricultural field 104 worked by the implement 120.

Additionally, in one or more implementations, the anomaly detection system 202 includes an implement safety system 716. In one or more embodiments, the implement safety system 716 can control operations of the agricultural vehicle 102 and/or the implement 120 based on the predicted anomalies. For example, in response to determining an implement anomaly, the implement safety system 716 can control a wide range of operations in connection with the agricultural vehicle 102 and/or the implement 120. To illustrate, the implement safety system 716: cause the implement 120 to stop working the agricultural field 104; cause the agricultural vehicle 102 to stop moving within the agricultural field 104, cause the agricultural vehicle 102 to slow down in the agricultural field 104, cause the agricultural vehicle 102 to deviate from a pre-planned route in the agricultural field 104, cause the agricultural vehicle 102 to use an onboard signal tower to highlight areas of the implement 120 corresponding to the implement anomalies and/or highlight areas of the agricultural field 104 including anomalous regions; cause the agricultural vehicle 102 to flash onboard visual lights, or cause the agricultural vehicle 102 to sound a horn or other auditory system.

Thus, the embodiment of the anomaly detection system 202 illustrated in FIG. 7 provides a comprehensive solution for detecting anomalies associated with operation of the implement 120 using implement sensors and the spatial sensors and generating the anomaly predictions based on the implements sensor data and the spatial data. The use of the implement sensors may facilitate triggering the anomaly detection manager 706 to apply the anomaly detection DNN 708 to spatial data and generate one or more anomaly predictions associated with the implement 120 and/or the agricultural field 104 worked by the implement 120. By integrating the implement sensor data with the spatial data, the anomaly detection system 202 enables accurate and robust detection of implement anomalies and anomalies in the agricultural field 104 worked by the implement 120, facilitating improved operation of the implement 120 and performance of the agricultural operation (e.g., improved working of the agricultural field 104), improving the safety and efficiency of agricultural operations. In addition, by using the anomaly detection system 202 to predict the implement anomalies and/or anomalies in the agricultural field 104, an operator of the agricultural machine 100 may tend to navigation of the agricultural machine 100 and other operations.

While the anomaly detection system 202 of FIG. 7 has been described and illustrated as including various components, the disclosure is not so limited. The anomaly detection system 202 may include additional components and/or may not include all of the components described above. For example, in some embodiments, the anomaly detection system 202 does not include a sensor data preprocessing manager 704, a data fusion manager 710, or an anomaly tracking manager. In some embodiments, the anomaly detection system 202 captures implement sensor data with one or more of the implement sensors 700; the anomaly detection manager 706 applies an anomaly detection DNN 708 to the implement sensor data to predict one or more anomalies associated with the implement 120; responsive to predicting the one or more anomalies associated with the implement 120; the anomaly detection manager 706 applies an anomaly detection DNN 708 to spatial data to predict one or more implement anomalies and/or anomalies in the agricultural field 104 worked by the implement 120; the display manager 714 displays one or more outputs and/or anomaly predictions; and the implement safety system 716 controls one or more operations of the implement 120 based on the one or more outputs, the anomaly predictions, and/or other data.

FIG. 8 is a simplified flow chart of a method 800 of detecting anomalies associated with an implement (e.g., the implement 120) during operation of the implement, in accordance with one or more embodiments of the disclosure. The method 800 includes receiving implement sensor data from implement sensors, as shown in act 802. The implement sensors may include, for example, one or more of the implement sensors 700 (e.g., one or more of the hydraulic sensors 260, one or more of the IMUs 262, one or more strain sensors 264, one or more microphones or microphone arrays 266, one or more additional sensors 268, and additional sensors configured to measure operating parameters of the agricultural machine 100 and/or the implement 120 (such as speed sensors, PTO sensors, other sensors)).

The method 800 may further include applying a first anomaly detection DNN to the implement sensor data to generate predicted implement anomalies based on the implement sensor data, as shown in act 804. For example, an anomaly detection manager may include a first anomaly detection DNN associated with one or more of the implement sensors and trained on a unique dataset associated with the one or more implement sensors to predict implement anomalies in the implement sensor data. In other embodiments, the method 800 includes determining an operating condition of the implement based on the implement sensor data. For example, the implement sensor data may provide an indication that the implement is in an operational state. In some such embodiments, the anomaly detection manager does not apply an anomaly detection deep neural network to the implement sensor data.

Responsive to generating the predicted implement anomalies or otherwise determining that the implement is in an operational state, the method 800 may include receiving spatial sensor data, as shown in act 806. The spatial sensors may include one or more of the cameras 214, one or more of the LiDAR units 212, and/or one or more of the radar units 216.

Responsive to receiving the spatial sensor data, the method 800 may include applying a second anomaly detection DNN to the spatial data to predict one or more anomalies associated with the implement, as shown in act 808. For example, the anomaly detection manager may include the second anomaly detection DNN trained to predict (detect) anomalies in the implement, such as anomalies associated with operation of the implement and/or anomalies in the agricultural field worked by the implement. In some embodiments, the second anomaly detection DNN predicts anomalies associated with operation of the implement, such as portions of the implement that are not interacting with the agricultural field as intended, portions of the implement that are not functioning, and/or portions of the agricultural field previously worked by the implement in a sub-optimal manner.

The method 800 may further include displaying the one or more predicted anomalies associated with the implement, as shown in act 810. Displaying the predicted anomalies associated with the implement may include displaying an output from the second anomaly detection DNN; displaying an output from the first anomaly detection DNN; displaying bounding boxes, a heatmap, animations, highlighting, or other visual indication of the predicted anomalies associated with the implement. In some embodiments, the display illustrates portions of the implement that include the predicted anomaly and/or portions of the agricultural field exhibiting an anomaly and were previously worked by the implement.

The method 800 may further include controlling one or more operations of the implement based on the predicted anomalies associated with the implement, as shown in act 812. Controlling one or more operations of the implement may include controlling one or more operations of the agricultural machine including the implement, such as one or more operations of the agricultural vehicle. For example, controlling the one or more operations of the implement may include one or more of: causing the implement 120 to stop working the agricultural field 104; causing the agricultural vehicle 102 to stop moving within the agricultural field 104, causing the agricultural vehicle 102 to slow down in the agricultural field 104, causing the agricultural vehicle 102 to deviate from a pre-planned route in the agricultural field 104, causing the agricultural vehicle 102 to use an onboard signal tower to highlight areas of the implement 120 corresponding to the implement anomalies and/or highlight areas of the agricultural field 104 including anomalous regions; causing the agricultural vehicle 102 to flash onboard visual lights, or causing the agricultural vehicle 102 to sound a horn or other auditory system.

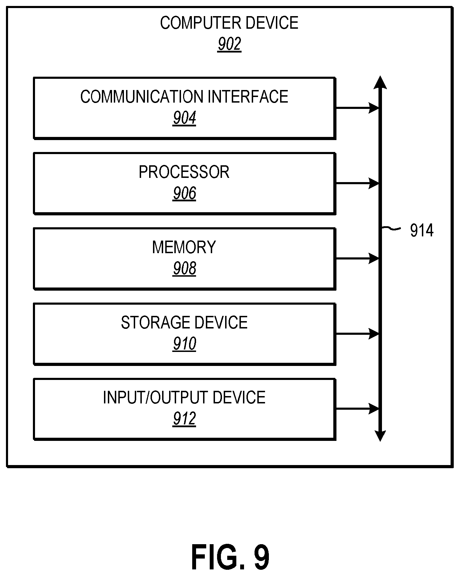

FIG. 9 is a schematic view of a computer device 902, in accordance with embodiments of the disclosure. The computer device 902 may correspond to the computing device 218 (FIG. 2). The computer device 902 may include a communication interface 904, at least one processor 906, a memory 908, a storage device 910, an input/output device 912, and a bus 914. The computer device 902 may be used to implement various functions, operations, acts, processes, and/or methods disclosed herein, such as the method 800.

The communication interface 904 may include hardware, software, or both. The communication interface 904 may provide one or more interfaces for communication (such as, for example, packet-based communication) between the computer device 902 and one or more other computing devices or networks (e.g., a server). As an example, and not by way of limitation, the communication interface 904 may include a network interface controller (NIC) or network adapter for communicating with an Ethernet or other wire-based network or a wireless NIC (WNIC) or wireless adapter for communicating with a wireless network, such as a Wi-Fi.

The at least one processor 906 may include hardware for executing instructions, such as those making up a computer program. By way of non-limiting example, to execute instructions, the at least one processor 906 may retrieve (or fetch) the instructions from an internal register, an internal cache, the memory 908, or the storage device 910 and decode and execute them to execute instructions. In some embodiments, the at least one processor 906 includes one or more internal caches for data, instructions, or addresses. The at least one processor 906 may include one or more instruction caches, one or more data caches, and one or more translation look aside buffers (TLBs). Instructions in the instruction caches may be copies of instructions in the memory 908 or the storage device 910.

The memory 908 may be coupled to the at least one processor 906. The memory 908 may be used for storing data, metadata, and programs for execution by the processor(s). The memory 908 may include one or more of volatile and non-volatile memories, such as Random-Access Memory ("RAM"), Read-Only Memory ("ROM"), a solid-state disk ("SSD"), Flash, Phase Change Memory ("PCM"), or other types of data storage. The memory 908 may be internal or distributed memory.

The storage device 910 may include storage for storing data or instructions. As an example, and not by way of limitation, storage device 910 may include a non-transitory storage medium described above. The storage device 910 may include a hard disk drive (HDD), Flash memory, an optical disc, a magneto-optical disc, magnetic tape, or a Universal Serial Bus (USB) drive or a combination of two or more of these. The storage device 910 may include removable or non-removable (or fixed) media, where appropriate. The storage device 910 may be internal or external to the storage device 910. In one or more embodiments, the storage device 910 is non-volatile, solid-state memory. In other embodiments, the storage device 910 includes read-only memory (ROM). Where appropriate, this ROM may be a mask programmed ROM, programmable ROM (PROM), erasable PROM (EPROM), electrically erasable PROM (EEPROM), electrically alterable ROM (EAROM), or Flash memory or a combination of two or more of these.

The storage device 910 may include machine-executable code stored thereon. The storage device 910 may include, for example, a non-transitory computer-readable storage medium. The machine-executable code includes information describing functional elements that may be implemented by (e.g., performed by) the at least one processor 906. The at least one processor 906 is adapted to implement (e.g., perform) the functional elements described by the machine-executable code. In some embodiments the at least one processor 906 may be configured to perform the functional elements described by the machine-executable code sequentially, concurrently (e.g., on one or more different hardware platforms), or in one or more parallel process streams.

When implemented by the at least one processor 906, the machine-executable code is configured to adapt the at least one processor 906 to perform operations of embodiments disclosed herein. For example, the machine-executable code may be configured to adapt the at least one processor 906 to perform at least a portion or a totality of any of the method 800 of FIG. 8. As another example, the machine-executable code may be configured to adapt the at least one processor 906 to perform at least a portion or a totality of the operations discussed for the agricultural machine 100 including the implement 120 of FIG. 2. As a specific, non-limiting example, the machine-executable code may be configured to adapt the at least one processor 906 to cause the I/O device 232 of the agricultural vehicle 102 to display predicted anomalies of the implement 120, as described above with reference to the anomaly detection system 202. In another non-limiting example, the machine-executable code may be configured to adapt the at least one processor 906 to cause the agricultural machine 100 to control one or more operations of the implement 120, as described above with reference to the method 800 of FIG. 8.

The input/output device 912 may allow an operator of the agricultural vehicle 102 to provide input to, receive output from, the computer device 902. The input/output device 912 may include a mouse, a keypad or a keyboard, a joystick, a touch screen, a camera, an optical scanner, network interface, modem, other known I/O devices, or a combination of such I/O interfaces.

In some embodiments, the bus 914 (*e.g.,* a Controller Area Network (CAN) bus, an ISOBUS (ISO 11783 Compliant Implement Control)) may include hardware, software, or both that couples components of computer device 902 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. A method of operating an agricultural machine including an agricultural implement towed by an agricultural vehicle in an agricultural field, the method comprising:
receiving spatial data of at least one of the agricultural implement or the agricultural field worked by the agricultural implement from one or more spatial sensors coupled to the agricultural vehicle or one or more LiDAR units coupled to the agricultural vehicle;
applying an anomaly detection deep neural network to the spatial data to generate one or more anomaly predictions associated with operation of the agricultural implement; and
controlling one or more operations of the agricultural implement based on the one or more anomaly predictions.

2. The method of claim 1, wherein receiving spatial data of the agricultural implement from one or more spatial sensors comprises receiving spatial data from one or more cameras coupled to the agricultural vehicle or one or more LiDAR units coupled to the agricultural vehicle.

3. The method of claim 1 or claim 2, further comprising receiving implement sensor data from one or more implement sensors coupled to the agricultural implement to determine an operating condition of the agricultural implement.

4. The method of claim 3, further comprising applying the anomaly detection deep neural network to the spatial data responsive to determining the agricultural implement is in an operating condition.

5. The method of claim 3 or claim 4, further comprising applying another anomaly detection deep neural network to the implement sensor data to generate one or more implement anomaly predictions.

6. The method of any one of claims 3 through 5, wherein receiving implement sensor data comprises receiving implement sensor data from one or more of an inertial measurement unit, a strain gauge, a microphone array, a stain gauge, or a hydraulic sensor.

7. The method of any one of claims 1 through 6, wherein generating one or more anomaly predictions associated with operation of the agricultural implement comprises generating one or more anomaly predictions of locations of the agricultural field previously worked by the agricultural implement.

8. The method of any one of claims 1 through 7, wherein receiving spatial data comprises receiving spatial data of an agricultural implement comprising a plough, a harrow, a planter, a sprayer, a fertilizer, an irrigator, a mower, a tedder, a cultivator, a rake, a baler, a mulcher, or a harvester.

9. The method of any one of claims 1 through 8, wherein applying an anomaly detection deep neural network to the spatial data comprises applying an anomaly detection deep neural network trained on a dataset comprising spatial data of the agricultural implement during normal operation of the agricultural implement.

10. The method of any one of claims 1 through 9, further comprising training the anomaly detection deep neural network to generate the anomaly predictions associated with operation of the agricultural implement by applying the anomaly detection deep neural network to training inputs associated with normal operating conditions of the agricultural implement.

11. An agricultural machine positioned in an agricultural field, comprising:
an agricultural vehicle;
an agricultural implement coupled to the agricultural vehicle;
one or more spatial sensors coupled to the agricultural vehicle and configured to generate spatial data of the agricultural implement;
one or more implement sensors coupled to the agricultural implement and configured to generate implement sensor data of the agricultural implement; and
an anomaly detection system operably coupled to the one or more spatial sensors, the anomaly detection system comprising:
at least one processor; and
at least one non-transitory computer-readable storage medium having instructions thereon that, when executed by the at least one processor, cause the anomaly detection system to:
receive the spatial data of the agricultural implement from the one or more spatial sensors;
apply an anomaly detection deep neural network to the spatial data to generate one or more anomaly predictions associated with the agricultural implement; and
control one or more operations of the agricultural implement based on the one or more anomaly predictions.

12. The agricultural machine of claim 11, wherein the at least one non-transitory computer-readable storage medium further stores instructions thereon that, when executed by the at least one processor, cause the anomaly detection system to receive the implement sensor data from the one or more implement sensors.

13. The agricultural machine of claim 12, wherein the at least one non-transitory computer-readable storage medium further stores instructions thereon that, when executed by the at least one processor, cause the anomaly detection system to apply the anomaly detection deep neural network to the spatial data responsive to predicting one or more anomalies based on the implement sensor data.

14. The agricultural machine of any one of claims 11 through 13, wherein the one or more implement sensors comprises one or more of an inertial measurement unit, a strain sensor, a microphone array, or a hydraulic sensor.

15. The agricultural machine of any one of claims 11 through 14, wherein the anomaly detection deep neural network comprises an auto-encoder.
